# EUROPEAN PATENT APPLICATION

(11) **EP 4 579 221 A1**
(43) Date of publication of application: **02.07.2025**
(21) Application number: 24222700.7
(22) Date of filing: 23.12.2024
(51) Int. Cl.: G01N 21/82, G01N 21/25, G01N 35/00, G01N 35/02, G01N 21/31

(54) **SAMPLE ANALYSIS SYSTEM**

(30) Priority: 27.12.2023 CN 202311834875; 29.09.2024 CN 202411371179; 12.10.2024 CN 202411428739
(71) Applicant: Shenzhen Mindray Bio-Medical Electronics Co., Ltd., Shenzhen, Guangdong 518057 (CN)
(72) Inventor: DAI, Yong, Shenzhen 518057 (CN); LIU, Yang, Shenzhen 518057 (CN); ZHOU, Lihua, Shenzhen 518057 (CN)
(74) Representative: KIPA AB

(57) **Abstract**

In a sample analysis system and method provided in embodiments of the invention, on one hand, interferent information in a to-be-detected sample may be obtained based on photoelectric data of the to-be-detected sample or a mixed solution of the to-be-detected sample; on the other hand, interferent information in a reaction solution may be obtained based on photoelectric data of the reaction solution of the to-be-detected sample; and an interferent type or interferent source in the reaction solution may be determined based on a combination of the two types of interferent information. Compared to a method for determining interferences by manually observing sample states, the technical solution of each of the embodiments of the invention may eliminate impacts of subjective factors and provide more diverse and comprehensive information for determining the interferences, thereby providing a more reliable basis for removing the interferences and further improving accuracy of the detection result of the sample.

## Description

### CROSS-REFERENCE TO RELATED APPLICATIONS

This application claims priorities to Chinese patent application No. 202411371179.1 filed to China National Intellectual Property Administration (CNIPA) on September 29, 2024 and entitled "SAMPLE ANALYSIS SYSTEM" and Chinese patent application No. 202311834875.7 filed to CNIPA on December 27, 2023 and entitled "SAMPLE ANALYSIS SYSTEM AND SAMPLE ANALYSIS METHOD".

### TECHNICAL FIELD

The invention relates to the technical field of medical devices, and more particularly to a sample analysis system and a sample analysis method.

### BACKGROUND

A sample analysis system, such as a biochemical analyzer, is an instrument for analyzing and detecting samples. In general, a reagent is added to the sample, and the sample that has been reacted with the reagent is detected in a certain way to obtain a detection result of the sample in each detection item. If there are interferences during detection, an accuracy of the detection result may be reduced. Therefore, there is a need for a method to accurately identify the interferences during the detection of the sample.

### SUMMARY

In view of this, the invention provides a sample analysis system and a sample analysis method, to determine information about an interferent during the detection of the sample, and provide a basis for removing interferences, thereby improving the accuracy of the detection result of the sample.

According to a first aspect, an embodiment of the invention provides a sample analysis system. The sample analysis system includes a sample dispensing mechanism, a reagent dispensing mechanism, a reaction device, a detection device, and a control device.

The sample dispensing mechanism is configured to dispense a to-be-detected sample in a sample tube into a reaction vessel.

The reagent dispensing mechanism is configured to dispense a reaction reagent into the reaction vessel.

The reaction device is provided with at least one reaction site where the reaction vessel is arranged, and a reaction solution is prepared from the to-be-detected sample and the reaction reagent in the reaction vessel.

The detection device includes a light source component and an optical signal detector. The light source component is configured to generate an irradiation light, the irradiation light forms an emission light after irradiating the reaction vessel, and the optical signal detector acquires the emission light to obtain photoelectric data.

The control device is configured to: control the sample analysis system to perform interferent detection on the to-be-detected sample or a mixed solution of the to-be-detected sample, to obtain first interferent information, the mixed solution being prepared from the to-be-detected sample and a pretreatment solution; obtain second interferent information based on the photoelectric data of the reaction solution; and determine an interferent type or an interferent source in the reaction solution based on the first interferent information and the second interferent information.

According to a second aspect, an embodiment of the invention provides a sample analysis system. The sample analysis system includes a sample dispensing mechanism, a reagent dispensing mechanism, a reaction device, a detection device, and a control device.

The sample dispensing mechanism is configured to dispense a to-be-detected sample in a sample tube into a reaction vessel.

The reagent dispensing mechanism is configured to dispense a reaction reagent into the reaction vessel.

The reaction device is provided with at least one reaction site where the reaction vessel is arranged, and a reaction solution is prepared from the to-be-detected sample and the reaction reagent in the reaction vessel.

The detection device includes a light source component and an optical signal detector. During detection of an item, the light source component is configured to generate an irradiation light, the irradiation light forms an emission light after irradiating the reaction vessel, and the optical signal detector acquires the emission light to obtain photoelectric data.

The control device is configured to: control the sample analysis system to perform interferent detection on the to-be-detected sample or a mixed solution of the to-be-detected sample, to obtain first interferent information, the mixed solution being prepared from the to-be-detected sample and a pretreatment solution; obtain second interferent information based on the photoelectric data of the reaction solution; and correct the photoelectric data based on the first interferent information and the second interferent information, to obtain a detection result of a detection item.

According to a third aspect, an embodiment of the invention provides a sample analysis system. The sample analysis system includes a sample dispensing mechanism, a reagent dispensing mechanism, a reaction device, a detection device, and a control device.

The sample dispensing mechanism is configured to dispense a to-be-detected sample in a sample tube into a reaction vessel.

The reagent dispensing mechanism is configured to dispense a reaction reagent into the reaction vessel.

The reaction device is provided with at least one reaction site where the reaction vessel is arranged, and a reaction solution is prepared from the to-be-detected sample and the reaction reagent in the reaction vessel.

The detection device includes a light source component and an optical signal detector. The light source component is configured to generate an irradiation light, the irradiation light forms an emission light after irradiating the reaction vessel, and the optical signal detector acquires the emission light to obtain photoelectric data.

The control device is configured to: control the sample analysis system to process the to-be-detected sample to remove an interferent from the to-be-detected sample, when determining that the interferent is present in the to-be-detected sample based on the to-be-detected sample or a mixed solution of the to-be-detected sample; control the sample dispensing mechanism to dispense the processed to-be-detected sample into the reaction vessel; and obtain a detection result of an item based on the photoelectric data of the reaction solution.

According to a fourth aspect, an embodiment of the invention provides a sample analysis system. The sample analysis system includes a sample dispensing mechanism, a reagent dispensing mechanism, a reaction device, a detection device, an acquisition device, and a control device.

The sample dispensing mechanism is configured to dispense a to-be-detected sample in a sample tube into a reaction vessel.

The reagent dispensing mechanism is configured to dispense a reaction reagent into the reaction vessel.

The reaction device is provided with at least one reaction site where the reaction vessel is arranged, and a reaction solution is prepared from the to-be-detected sample and the reaction reagent in the reaction vessel.

The detection device includes a light source component and an optical signal detector. The light source component is configured to generate an irradiation light, the irradiation light forms an emission light after irradiating the reaction vessel, and the optical signal detector acquires the emission light to obtain photoelectric data.

The acquisition device is configured to acquire first interferent information in the to-be-detected sample or a mixed solution of the to-be-detected sample. The mixed solution is prepared from the to-be-detected sample and a pretreatment solution.

The control device is configured to: obtain second interferent information based on the photoelectric data of the reaction solution; and determine an interferent type or an interferent source in the reaction solution based on the first interferent information and the second interferent information.

According to a fifth aspect, an embodiment of the invention provides a sample analysis system. The sample analysis system includes a sample preparation device, a detection device, and a control device.

The sample preparation device is configured to prepare a reaction solution using at least a second portion of a to-be-detected sample and a reaction reagent.

The detection device includes a light source component and an optical signal detector. The light source component is configured to generate an irradiation light, the irradiation light forms a first emission light after irradiating a pretreatment solution or at least a first portion of the to-be-detected sample, and the optical signal detector acquires the first emission light to obtain first photoelectric data. The irradiation light forms a second emission light after irradiating the reaction solution, and the optical signal detector acquires the second emission light to obtain second photoelectric data. The pretreatment solution is prepared by the sample preparation device using at least the first portion of the to-be-detected sample and a pretreatment reagent.

The control device is configured to: obtain first interferent information in the to-be-detected sample based on the first photoelectric data; obtain second interferent information in the reaction solution and a detection result of a detection item for the to-be-detected sample based on the second photoelectric data; and determine an interferent type or an interferent source in the reaction solution based on the first interferent information in combination with the second interferent information.

According to a sixth aspect, an embodiment of the invention provides a sample analysis system. The sample analysis system includes a sample preparation device, a detection device, and a control device.

The sample preparation device is configured to prepare a reaction solution using at least a portion of a to-be-detected sample and a reaction reagent.

The detection device includes a light source component and an optical signal detector. The light source component is configured to generate an irradiation light, the irradiation light forms a first emission light after irradiating a pretreatment solution or at least a portion of the to-be-detected sample, and the optical signal detector acquires the first emission light to obtain first photoelectric data. The irradiation light forms a second emission light after irradiating the reaction solution, and the optical signal detector acquires the second emission light to obtain second photoelectric data. The pretreatment solution is prepared by the sample preparation device using at least a portion of the to-be-detected sample and a pretreatment reagent.

The control device is configured to: obtain first interferent information in the to-be-detected sample based on the first photoelectric data; obtain second interferent information in the reaction solution based on the second photoelectric data; correct the second photoelectric data based on the first interferent information and the second interferent information; and obtain a detection result of a detection item for the to-be-detected sample based on the corrected second photoelectric data.

According to a seventh aspect, an embodiment of the invention provides a sample analysis system. The sample analysis system includes a sample preparation device, a detection device, an acquisition device, and a control device.

The sample preparation device is configured to prepare a reaction solution using at least a portion of a to-be-detected sample and a reaction reagent.

The detection device includes a light source component and an optical signal detector. The light source component is configured to generate an irradiation light, the irradiation light forms an emission light after irradiating the reaction solution, and the optical signal detector acquires the emission light to obtain photoelectric data.

The acquisition device is configured to acquire first interferent information in the to-be-detected sample or a pretreatment solution. The pretreatment solution is prepared by the sample preparation device using at least a portion of the to-be-detected sample and a pretreatment reagent.

The control device is configured to: obtain second interferent information in the reaction solution based on the photoelectric data; and determine an interferent type or an interferent source in the reaction solution based on the first interferent information in combination with the second interferent information.

According to an eighth aspect, an embodiment of the invention provides a sample analysis system. The sample analysis system includes a sample preparation device, a detection device, and a control device.

The sample preparation device is configured to prepare a reaction solution using at least a portion of a to-be-detected sample and a reaction reagent.

The detection device is configured to detect a pretreatment solution or the to-be-detected sample to obtain a first detection parameter, and detect the reaction solution to obtain a second detection parameter. The pretreatment solution is prepared by the sample preparation device using at least a portion of the to-be-detected sample and a pretreatment reagent.

The control device is configured to: obtain first interferent information in the to-be-detected sample based on the first detection parameter; obtain second interferent information in the reaction solution based on the second detection parameter; and determine an interferent type or an interferent source in the reaction solution based on the first interferent information and the second interferent information.

According to a ninth aspect, an embodiment of the invention provides a sample analysis method. The sample analysis method includes the following operations.

First interferent information is acquired from an interferent detection on a to-be-detected sample or a mixed solution of the to-be-detected sample. The mixed solution is prepared from the to-be-detected sample and a pretreatment solution.

Photoelectric data of a reaction solution prepared from the to-be-detected sample and a reaction reagent are acquired, and second interferent information is obtained based on the photoelectric data of the reaction solution. The photoelectric data are obtained by acquiring an emission light after a light source irradiates the reaction solution.

An interferent type or an interferent source in the reaction solution is determined based on the first interferent information and the second interferent information; or, the photoelectric data are corrected based on the first interferent information and the second interferent information, to obtain a detection result of a detection item.

According to a tenth aspect, an embodiment of the invention provides a sample analysis method. The sample analysis method includes the following operations.

Interferent detection is performed on a to-be-detected sample or a mixed solution of the to-be-detected sample. The mixed solution is prepared from the to-be-detected sample and a pretreatment solution.

The to-be-detected sample is processed to remove an interferent from the to-be-detected sample, when the interferent detection indicates that the interferent is present in the to-be-detected sample.

A reaction solution is prepared from the processed to-be-detected sample and a reagent, and photoelectric data of the reaction solution are acquired. The photoelectric data are obtained by acquiring an emission light after a light source irradiates the reaction solution during detection of an item.

A detection result of the item is determined based on the photoelectric data of the reaction solution.

It can be seen from the above technical solutions that, in the sample analysis system and the sample analysis method provided in embodiments of the invention, on one hand, the interferent information in the to-be-detected sample may be obtained based on the photoelectric data of the to-be-detected sample or the mixed solution of the to-be-detected sample; on the other hand, the interferent information in the reaction solution may also be obtained based on the photoelectric data of the reaction solution of the to-be-detected sample; so that the interferent type or the interferent source in the reaction solution may be determined by combining the two pieces of interferent information. Compared to a method for determining interferences by manually observing a state of the sample, the technical solution in each of the embodiments of the invention may eliminate an influence of subjective factors and provide more diverse and comprehensive information for determining the interferences, thereby providing a more reliable basis for removing the interferences and further improving an accuracy of the detection result of the sample.

### BRIEF DESCRIPTION OF THE DRAWINGS

In order to explain technical solutions in the related art or the embodiments of the invention more clearly, drawings required to be used in descriptions of the related art or the embodiments will be briefly introduced below. It is apparent that the drawings in the following descriptions are only some embodiments of the invention, and other drawings may also be obtained by those of ordinary skill in the art based on these drawings without paying any creative work.
FIG. 1 is a schematic structural diagram of a sample analysis system provided in an embodiment of the invention.
FIG. 2A and FIG. 2B are two exemplary diagrams of optical signal pulse waveforms provided in embodiments of the invention.
FIG. 3A and FIG. 3B are two schematic flowcharts of sample interference analysis methods provided in embodiments of the invention.
FIG. 4A is an exemplary diagram of a three-dimensional (3D) spectrum in case that a globulin interference is present in a creatinine item provided in an embodiment of the invention.
FIG. 4B is an exemplary diagram of a 3D spectrum in case that a lipemia interference is present in a creatinine item provided in an embodiment of the invention.
FIG. 5 is a schematic flowchart of a sample interference analysis method provided in an embodiment of the invention.
FIG. 6A is an exemplary diagram of a spectrum in case that no interference is present in a Creatine Kinase (CK) item provided in an embodiment of the invention.
FIG. 6B is an exemplary diagram of a spectrum in case that a hemolysis interference is present in a CK item provided in an embodiment of the invention.
FIG. 7 is an exemplary diagram of an interference prompt information provided in an embodiment of the invention.
FIG. 8A and FIG. 8B are two schematic flowcharts of redetecting a sample provided in embodiments of the invention.
FIG. 9 is a schematic flowchart of a sample interference analysis method provided in an embodiment of the invention.
FIG. 10 is a schematic flowchart of a sample interference analysis method provided in an embodiment of the invention.

### DETAILED DESCRIPTION

In a clinical detection of a sample, the sample itself or a reaction process is usually subject to interferences that can affect an accuracy of a detection item. The interferences may come from various sources including, but are not limited to: a high concentration of ambient CO₂ that changes an alkaline environment of the reaction, physical hemolysis due to a physical collision during blood acquisition, lipemia due to an unregulated blood acquisition of a patient, etc. At present, the interferences are usually removed by manually observing the sample. However, such interference removal method is affected by subjective factors or makes determination based on a single factor, which results in an inaccurate determination of the interferences. If an interferent information cannot be determined, corresponding treatment measures cannot be taken to remove the interferences. Moreover, an improper abnormality treatment method not only cannot remove the interferences, but also may waste the reagent, affect a sample detection throughput and an overall efficiency, etc.

Embodiments of the invention provide a sample analysis system, which determines the interferent information by using photoelectric data of a to-be-detected sample (or a pretreatment solution of the to-be-detected sample) in combination with photoelectric data of a reaction solution prepared from the to-be-detected sample, and provides an accurate basis for removing the interferences.

Hereinafter, technical solutions in the embodiments of the invention will be clearly and completely described with reference to drawings in the embodiments of the invention. It is apparent that the described embodiments are only a part of the embodiments of the invention, rather than all of the embodiments. Based on the embodiments in the invention, all other embodiments obtained by those of ordinary skill in the art without paying any creative work shall fall within the scope of protection of the invention.

Specifically, an embodiment of the invention provides a sample analysis system. The sample analysis system includes a sample preparation device, a detection device, and a control device.

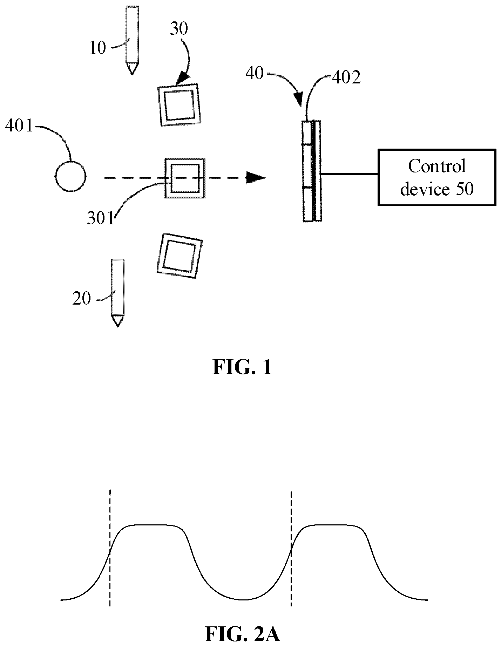

The sample preparation device is configured to prepare a reaction solution using at least a portion of a to-be-detected sample and a reaction reagent, and prepare a pretreatment solution of the to-be-detected sample using at least a portion of the to-be-detected sample and a pretreatment reagent. A configuration of the sample preparation device may refer to FIG. 1, in which the sample preparation device includes a sample dispensing mechanism 10, a reagent dispensing mechanism 20, and a reaction device 30.

The detection device includes a light source component and an optical signal detector. The light source component is configured to generate an irradiation light, the irradiation light forms a first emission light after irradiating the pretreatment solution or at least a portion of the to-be-detected sample, and the optical signal detector acquires the first emission light to obtain first photoelectric data. The irradiation light forms a second emission light after irradiating the reaction solution, and the optical signal detector acquires the second emission light to obtain second photoelectric data. It may be seen that the detection device may obtain the photoelectric data of the to-be-detected sample (or the pretreatment solution of the to-be-detected sample) by using an optical detection method, and the photoelectric data are referred to as the first photoelectric data for ease of differentiation. The detection device may also obtain the photoelectric data of the reaction solution by using the optical detection method, and the photoelectric data are referred to as the second photoelectric data for ease of differentiation.

The control device is configured to: obtain an interferent information in the to-be-detected sample based on the first photoelectric data (the interferent information in the to-be-detected sample may be referred to as first interferent information for ease of differentiation); obtain an interferent information in the reaction solution (the interferent information in the reaction solution may be referred to as second interferent information for ease of differentiation) and a detection result of a detection item for the to-be-detected sample based on the second photoelectric data; and determine an interferent type or an interferent source in the reaction solution based on the first interferent information in combination with the second interferent information.

It should be noted that on one hand, the second photoelectric data may be used to obtain the interferent information in the reaction solution, and on the other hand, the second photoelectric data may also be used to obtain the detection result of the detection item for the to-be-detected sample. In a specific implementation, in order to ensure an accuracy of the detection result of the detection item, the detection result of the detection item may be comprehensively determined by using the second photoelectric data in combination with the interferent type or the interferent source.

The detection result of the detection item is obtained based on the photoelectric data of the reaction solution. However, the photoelectric data are sensitive to some interferences in the reaction solution. For example, abnormality in a physical characteristic of the reaction solution, such as color, flocs, lumps, precipitation or the like, may cause the photoelectric data of the reaction solution to be inaccurate, and thus the detection result obtained based on the photoelectric data of the reaction solution will also be inaccurate. Therefore, in order to determine the interference in the reaction solution more accurately, the interferent type or the interferent source in the reaction solution is comprehensively determined based on two types of interferent information, i.e., the first interferent information and the second interferent information in the embodiment of the invention, which may be referred to as a joint determination. Compared to a method for determining the interferent type or the interferent source in the reaction solution by using only the second interferent information, information sources for determining the interference in such joint determination method are richer, and the determination result of the interference is more accurate. It may be understood that the joint determination method in each of the embodiments of the invention does not use only the first interferent information or only the second interferent information to obtain the interferent type or the interferent source in the reaction solution, instead, the two types of interferent information, i.e., the first interferent information and the second interferent information are combined to obtain the interferent type or the interferent source. Furthermore, from the perspective of the interferent type or the interferent source, it is a comprehensive determination result from the two types of interferent information, i.e., the first interferent information and the second interferent information, rather than being obtained from only one of the two types of interferent information.

The joint determination may include various implementations, for example, in a specific implementation, the first interferent information is compared to the second interferent information, and the interferent type or the interferent source in the reaction solution is determined based on the comparison result. The first interferent information reflects the interference related to the to-be-detected sample, and the second interferent information reflects the interference related to the reaction solution. Difference or similarity between interferences reflected by the first interferent information and the second interferent information may be found by comparing the two types of interferent information, and thus the interferent source or the interferent type may be determined.

In a specific comparison method, the first interferent information and the second interferent information are signal waveforms (referred to as a first signal waveform and a second signal waveform respectively), and the interferent source may be determined by comparing a difference between the first signal waveform and the second signal waveform. Specifically, if the first signal waveform is an abnormal signal waveform and the second signal waveform is an abnormal signal waveform, it is indicated that there is a large probability that the interferent comes from the to-be-detected sample. If the first signal waveform is a normal signal waveform and the second signal waveform is an abnormal signal waveform, it is indicated that there is a large probability that the interferent comes from the reaction reagent added to the to-be-detected sample or comes from the reaction process. If the first signal waveform is an abnormal signal waveform and the second signal waveform is a normal signal waveform, it is indicated that the detection is abnormal or there is a large probability that the interferent comes from the to-be-detected sample. If the first signal waveform is a normal signal waveform and the second signal waveform is a normal signal waveform, it is indicated that no interferent is present.

In another specific comparison method, the first interferent information and the second interferent information are interferent contents (referred to as a first interferent content and a second interferent content respectively), and the interferent type may be determined by comparing a difference between the first interferent content and the second interferent content. For example, the first interferent content indicates that a lipemia interferent content is 10, and the second interferent content indicates that a lipemia interferent content and a globulin interferent content are 100 in a whole, then the globulin interferent content may be determined to be 90 by combining the first interferent content with the second interferent content. Therefore, it may be seen that the comparison between the two types of interferent information may also be a joint calculation with the two types of interferent information. The joint calculation is not limited to subtraction, and a corresponding calculation method may be provided based on a specific interferent type.

In yet another specific comparison method, the first interferent information and the second interferent information are interferent types (referred to as a first interferent type and a second interferent type respectively), and the interferent type in the reaction solution may be determined by comparing a commonality and difference between the first interferent type and the second interferent type. For example, a common interferent type between the first interferent type and the second interferent type is determined as the interferent type in the reaction solution; or, if the first interferent type does not include a specific interferent type and the second interferent type includes the specific interferent type, the specific interferent type is removed from the second interferent type and then the remaining second interferent type is used as the interferent type in the reaction solution.

In addition to the above comparison methods, another specific implementation of the joint determination is that the first interferent information and the second interferent information are inputted into a pre-trained artificial intelligence (AI) detection model, and the AI detection model combines the first interferent information with the second interferent information, to comprehensively determine the interferent type or the interferent source in the reaction solution.

With reference to FIG. 1, it is a schematic structural diagram of a sample analysis system provided in an embodiment of the invention. The sample analysis system may include, but is not limited to any one of a biochemical analysis system and a coagulation analysis system. As shown in FIG. 1, the sample analysis system includes a sample dispensing mechanism 10, a reagent dispensing mechanism 20, a reaction device 30, a detection device 40, and a control device 50.

The sample dispensing mechanism 10 is configured to dispense a portion of a to-be-detected sample in a sample tube into a reaction vessel, and the to-be-detected sample may include, but is not limited to any one of a blood sample, a body fluid sample and a urine sample. In an implementation, the sample dispensing mechanism includes at least a sampling needle to aspirate the to-be-detected sample from the sample tube and dispense the aspirated to-be-detected sample into the reaction vessel in the reaction device. For example, the sampling needle of the sample dispensing mechanism 10 in FIG. 1 aspirates a portion of the to-be-detected sample from the sample tube and dispenses the portion of the to-be-detected sample into the reaction vessel 301. In an implementation, the sampling needle of the sample dispensing mechanism 10 performs a two-dimensional (2D) or three-dimensional (3D) movement in space through a 2D or 3D driving mechanism, to: move to aspirate a portion of the to-be-detected sample from a sample vessel, move onto the reaction vessel 301 to which the sample is added, and discharge the sample into the reaction vessel 301.

The reagent dispensing mechanism 20 is configured to dispense a reagent (a pretreatment reagent and a reaction reagent) into the reaction vessel. In an implementation, the reagent dispensing mechanism 20 may include a reagent needle, and the reagent needle performs a 2D or 3D movement in space through a 2D or 3D driving mechanism, to: move to aspirate the reagent carried by a reagent component, move onto the reaction vessel 301 to which the reagent is added, and discharge the reagent into the reaction vessel 301. In the embodiments of the invention, although the pretreatment reagent may be referred to as a reagent, it is different from the reaction reagent in that the pretreatment reagent does not have a biochemical reaction with the to-be-detected sample, and only plays a role of diluting the to-be-detected sample, creating a reaction environment for the to-be-detected sample, etc.

It should be noted that when the reaction solution is prepared in each of the embodiments of the invention, the order of dispensing the reagent and the to-be-detected sample into the reaction vessel is not limited, that is, the reagent may be dispensed into the reaction vessel and then the to-be-detected sample may be dispensed into the reaction vessel; or the to-be-detected sample may be dispensed into the reaction vessel and then the reagent may be dispensed into the reaction vessel.

The reaction device 30 is provided with at least one reaction site where the reaction vessel 301 carrying the reaction solution is arranged, and the reaction solution is prepared from the to-be-detected sample and the reagent. The reaction vessel is for example a reaction container, a reaction tank, etc. In an implementation, the reaction device 30 may be a reaction disk arranged in a disk-like structure and provided with one or more reaction sites where the reaction vessels are arranged. The reaction disk is rotatable and drives the reaction vessels in its reaction sites to rotate, to dispatch the reaction vessel within the reaction disk and incubate the reaction solution in the reaction vessel. In an implementation, the sample analysis system further includes a mixing mechanism configured to mix the reaction solution required to be mixed in the reaction vessel, to uniformly distribute substances in the reaction solution.

The detection device 40 includes a light source component 401 and an optical signal detector 402. The light source component 401 is configured to generate an irradiation light, the irradiation light forms an emission light after irradiating the reaction vessel 301, and the optical signal detector 402 acquires the emission light to obtain photoelectric data. In an implementation, the optical signal detector 402 may be a photometer.

The reaction solution may be prepared after the reagent is mixed with the to-be-detected sample in the reaction vessel 301, and the photoelectric data obtained in this case are photoelectric data of the reaction solution. It should be noted that in some embodiments, the reagent is not dispensed after the to-be-detected sample is dispensed into the reaction vessel 301, and in this case, the detection device 40 may acquire photoelectric data of the to-be-detected sample. In some other embodiments, the to-be-detected sample is not dispensed after the reagent is dispensed into the reaction vessel 301, and in this case, the detection device 40 may acquire photoelectric data of the reagent.

The manner in which the detection device 40 obtains the photoelectric data may include various specific implementations.

In an implementation, the photoelectric data are acquired in full domain. The irradiation light generated by the light source component 401 irradiates a same position of the reaction solution in the reaction vessel, the resulting emission light includes at least two optical signals with different wavelengths, and the optical signal detector 402 converts the at least two optical signals with different wavelengths into the photoelectric data. For example, multiple optical signals with multiple wavelengths are simultaneously acquired in parallel, detection positions and time periods of the multiple wavelengths are the same, and the photoelectric data corresponding to the multiple wavelengths may be referenced to each other, for example, state information of the reaction solution may be obtained therefrom.

In another implementation, the photoelectric data are acquired in full time. The reaction vessel 301 rotates around the light source component 401, the photoelectric data are acquired during continuous irradiation of the reaction vessel 402 by the light source component 401, and the photoelectric data include signal sequences formed by relationships between acquisition moments and intensities of the at least two optical signals with different wavelengths. In some implementations, the signal sequence may also be referred to as an optical signal pulse waveform, the signal sequence may be a graph formed by pulses and including intensities of optical signals and time information, and the signal sequence may also be a data array including correspondences between the intensities of optical signals and the time information.

During continuous irradiation of the same reaction vessel 402 by the light source component 401, photoelectric data corresponding to the wavelength are acquired in one or more detection periods. The photoelectric data corresponding to the wavelength include signal sequences in the one or more detection periods, and the signal sequence in each detection period includes at least two light intensity data corresponding to the wavelength. FIG. 2A is shown as an example, in which the photoelectric data include signal sequences in two detection periods, and the signal sequence in each detection period is formed by correspondences between at least two light intensity signals and the acquisition moments.

In another specific implementation, the photoelectric data are acquired in full time and full domain, that is, it is a combination of the above two acquisition methods, and optical signals corresponding to at least two wavelengths are acquired in a full time period, to obtain photoelectric data. The photoelectric data obtained in this case may include signal sequences formed by relationships between intensities and acquisition moments of the optical signals corresponding to at least two wavelengths.

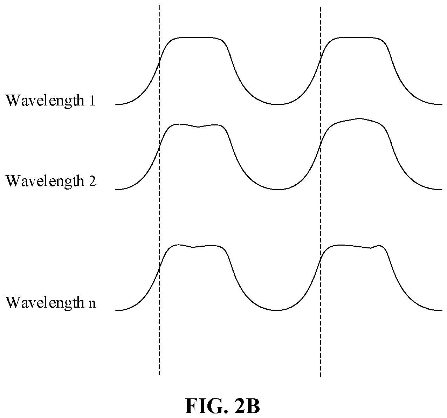

Specifically, during continuous irradiation of the same reaction vessel by the light source component, photoelectric data corresponding to n wavelengths are acquired in parallel in one or more detection periods, each photoelectric data corresponding to a respective wavelength include signal sequences in the one or more detection periods, and the signal sequence in each detection period includes at least two light intensity data corresponding to the wavelength. FIG. 2B is shown as an example, the detection device acquires full-time photoelectric data corresponding to multiple wavelengths in two detection periods of the reaction vessel in parallel, the photoelectric data include signal sequences corresponding to multiple wavelengths from wavelength 1 to wavelength n, and each signal sequence includes correspondences between intensities and acquisition moments of at least two optical signals with different wavelengths. It may also be considered that optical signal pulse waveforms corresponding to multiple wavelengths are obtained in FIG. 2B.

In yet another specific implementation, the photoelectric data are acquired by using Panorama, Dynamic, Recognization (PDR) technology, that is, optical signals are dynamically acquired in full time period, full wavelength band and full reaction domain, to obtain the photoelectric data of the reaction solution.

In order to distinguish from the reaction vessel containing the to-be-detected sample (or the pretreatment solution of the to-be-detected sample), the above reaction vessel containing the reaction solution is referred to as a second reaction vessel. Furthermore, in order to distinguish from the emission light formed after the irradiation light irradiates the to-be-detected sample (or the pretreatment solution of the to-be-detected sample), the emission light formed after the irradiation light irradiates the reaction solution may be referred to as the second emission light.

The control device 50 is configured to: control the sample analysis system to perform interferent detection on the to-be-detected sample or the pretreatment solution of the to-be-detected sample, to obtain first interferent information; obtain second interferent information based on the photoelectric data of the reaction solution; and determine an interferent type or an interferent source in the reaction solution based on the first interferent information and the second interferent information.

Specifically, the sample analysis system may be controlled by the control device 50 to perform the interferent detection on the to-be-detected sample (or the pretreatment solution of the to-be-detected sample), to obtain the interferent information. It should be noted that the interferent detection may be any detection means capable of detecting information about the interferent.

The optical detection method may be used in some embodiments.

The sample dispensing mechanism is configured to dispense a portion of the to-be-detected sample into the reaction vessel (in order to distinguish from the reaction vessel containing the reaction solution, the reaction vessel containing the to-be-detected sample is referred to as a first reaction vessel), the reagent dispensing mechanism is configured to dispense the pretreatment reagent into the first reaction vessel to form the pretreatment solution (or the pretreatment reagent is not dispensed into the first reaction vessel, then the first reaction vessel contains the to-be-detected sample at this time).

An emission light (a first emission light) is formed after the irradiation light emitted by the light source component 401 irradiates the to-be-detected sample or the pretreatment solution of the to-be-detected sample in the first reaction vessel, and the optical signal detector 402 acquires the emission light and converts the emission light into photoelectric data (first photoelectric data). The detection device 40 performs interferent detection on the to-be-detected sample or the pretreatment solution of the to-be-detected sample, to obtain the photoelectric data of the to-be-detected sample or the pretreatment solution of the to-be-detected sample. For example, the detection device 40 performs serum index detection on the to-be-detected sample (or the pretreatment solution of the to-be-detected sample) to obtain the first photoelectric data. For example, the detection device 40 performs item detection on the to-be-detected sample (or the pretreatment solution of the to-be-detected sample) to obtain the first photoelectric data. Further, the control device 50 obtains the first interferent information in the to-be-detected sample based on the first photoelectric data of the to-be-detected sample or the pretreatment solution of the to-be-detected sample.

The above method may be referred to as a speed-down method for detecting the first interferent information, and the first interferent information may also be detected by a non-speed-down method as follows.

The sample dispensing mechanism 10 dispenses at least a portion of the to-be-detected sample into the reaction vessel, and the reagent dispensing mechanism 20 is configured to dispense the pretreatment reagent into the reaction vessel to form a pretreatment solution. At this time, the reaction vessel contains the pretreatment solution of the to-be-detected sample. A first emission light is formed after the irradiation light emitted by the light source component 401 irradiates the pretreatment solution in the reaction vessel, and the optical signal detector 402 acquires the first emission light and converts the first emission light into first photoelectric data. Further, the control device 50 obtains the first interferent information in the to-be-detected sample based on the first photoelectric data of the pretreatment solution of the to-be-detected sample.

Furthermore, the reagent dispensing mechanism 20 is further configured to dispense the reaction reagent into the pretreatment solution, to form a reaction solution. The reaction device is provided with at least one reaction site where the reaction vessel is arranged, and the pretreatment solution contained in the reaction vessel reacts with the reaction reagent to form the reaction solution. A second emission light is formed after the irradiation light emitted by the light source component 401 irradiates the reaction solution in the reaction vessel, and the optical signal detector 402 acquires the second emission light to obtain second photoelectric data. Since the first photoelectric data and the second photoelectric data are obtained by successively irradiating the same reaction vessel, such method may omit a sample preparation operation and shorten a detection duration.

In a specific implementation, the first interferent information in the to-be-detected sample is information of an interferent that causes an abnormality in a characteristic of the to-be-detected sample. Abnormality in the characteristic includes abnormality in a physical characteristic, such as abnormality in terms of precipitation, color, flocs, lumps, etc.

In some embodiments, a visual inspection method may be used, for example, the sample analysis system may acquire a sample image of the to-be-detected sample (or the pretreatment solution of the to-be-detected sample) by an image acquisition module. Since some interferent information may affect an appearance state of the sample, for example, the sample becomes turbid due to lipemia or the like, the control device 50 obtains the interferent information by processing and analyzing the sample image. For example, a traditional image analysis method is used to extract at least one of the following image features in the sample image: an edge feature, a gray distribution feature, a color feature, a texture feature, a shape feature and a spatial relationship feature, to obtain the interferent information. For another example, the sample image is inputted into a machine learning model, and the machine learning model identifies the interferent information in the sample image. In some embodiments, the sample image is inputted into a first preset machine learning model, and the interferent information in the to-be-detected sample (or the pretreatment solution of the to-be-detected sample) outputted by the first machine learning model is obtained. In some embodiments, the sample image is inputted into a second preset machine learning model, a serum index of the to-be-detected sample outputted by the second machine learning model is obtained, and the interferent information in the to-be-detected sample (or the pretreatment solution of the to-be-detected sample) is obtained based on the serum index. A structure of the first machine learning model may be different from or the same as that of the second machine learning model, and the structures of the first machine learning model and the second machine learning model are not limited in the embodiments of the invention. For example, each of the first machine learning model and the second machine learning model is a neural network model, and may be formed by a Convolutional Neural Network (CNN).

The pretreatment solution may be prepared after the to-be-detected sample is mixed with the pretreatment reagent (the pretreatment reagent includes, but is not limited to physiological saline, buffer solution, diluent, etc.). In each of the embodiments of the invention, although the pretreatment reagent may be referred to as a reagent, it is different from the reaction reagent in that the pretreatment reagent does not have a biochemical reaction with the to-be-detected sample, and only plays a role of diluting the to-be-detected sample, creating a reaction environment for the to-be-detected sample, etc.

The to-be-detected sample or the pretreatment solution of the to-be-detected sample is subject to detection to obtain the interferent information, that is, the interferent information is obtained before reaction, and may indicate an interference condition of the to-be-detected sample itself or the pretreatment solution of the to-be-detected sample. In order to distinguish from the interferent information in the reaction solution described below, the interferent information obtained from the to-be-detected sample (or the pretreatment solution of the to-be-detected sample) is referred to as the first interferent information.

The control device 50 may further analyze the photoelectric data of the reaction solution to obtain the second interferent information. The second interferent information is obtained by detecting the reaction solution after the reaction solution is prepared from a biochemical reaction between the to-be-detected sample and the reaction reagent, and may indicate an interference condition occurred when the reaction reagent is added to the to-be-detected sample.

Therefore, the control device 50 may determine the interferent type or the interferent source in the reaction solution by combining the first interferent information with the second interferent information. Specifically, in some embodiments, the control device 50 may determine whether the interferent comes from the to-be-detected sample itself, the reaction reagent, or the reaction process (for example, a reaction cup, a stirring process, etc.). In some other embodiments, the control device 50 may determine a specific type of the interferent, such as a lipemia interference, an icterus interference, a hemolysis interference, a globulin interference, a heparin interference, etc.

It may be seen from the above technical solution that in the sample analysis system provided in the embodiments of the invention, the detection device may obtain an interferent information from the to-be-detected sample (or the pretreatment solution of the to-be-detected sample), obtain another interferent information from the reaction solution of the to-be-detected sample, and determine a specific interferent type or interferent source by combining the two types of interferent information, thereby providing a basis for removing interferences and further improving the accuracy of the detection result of the sample.

Multiple methods may be used for detecting the first interferent information and the second interferent information, and the two interferent information may be obtained in the same test or in different tests, which will be exemplified below by several specific implementations.

In a specific implementation, the sample dispensing mechanism aspirates a first to-be-detected sample from a sample tube and dispenses the first to-be-detected sample into the first reaction vessel, and aspirates a second to-be-detected sample from a sample tube and dispenses the second to-be-detected sample into the second reaction vessel. It should be noted that the sample dispensing mechanism may aspirate the second to-be-detected sample after the interferent detection has been performed on the first to-be-detected sample, or may aspirate the second to-be-detected sample at any time before or during the interferent detection.

The first reaction vessel may or may not include a pretreatment reagent for the first to-be-detected sample. The control device controls the sample analysis system to perform the interferent detection on the first to-be-detected sample or a pretreatment solution prepared from the first to-be-detected sample and the pretreatment reagent in the first reaction vessel, to obtain first interferent information.

In a clinical testing, icterus, lipemia or hemolysis may appear in a human blood sample due to a blood acquisition operation, diseases, usage of drugs, or personal physique, etc. Icterus, lipemia and hemolysis are known as three major interferences in the biochemical clinical detection, which have pain points such as high frequency of appearance, great impact on the detection result, difficulty in dealing with interferences and requiring resampling, etc. In order to determine whether the above interferent information is present in the to-be-detected sample, in some embodiments, the sample analysis system may perform a serum index test on the first to-be-detected sample or the pretreatment solution of the first to-be-detected sample, to obtain the first interferent information. The serum index (i.e., Hemolysis, Icterus, Lipemia (HIL)) may reflect interferent information in the blood sample. Specifically, the blood sample may be divided into the following four types: a hemolysis sample, an icterus sample, a lipemia sample, and a normal sample. Hemolysis H, Icterus I and Lipemia L (also referred to as chylemia) are collectively referred to as HIL in the embodiments of the invention. The hemolysis index H is used to monitor a degree of hemolysis in a specimen, the higher the value, the higher the degree of hemolysis interference. The icterus index I is used to monitor a degree of icterus in the specimen, the higher the value, the higher the degree of icterus interference. The lipemia index L is used to monitor a degree of turbidity of the specimen, the higher the value, the higher the degree of lipemia interference (turbidity). The first interferent information may also be obtained by using other interferent detection methods other than the serum index detection.

A reaction solution is prepared from the second to-be-detected sample and the reaction reagent in the second reaction vessel, and the control device obtains second interferent information based on photoelectric data of the reaction solution. The second interferent information may be obtained in a detection item, that is, an item test process may obtain not only a detection result of the detection item, but also may obtain the interferent information. Alternatively, the second interferent information may be obtained in any process specific to the interferent detection.

In some embodiments, the sample analysis system performs interferent detection on the first to-be-detected sample or the pretreatment solution of the first to-be-detected sample during a first item test, to obtain first interferent information, controls the detection device to obtain photoelectric data of the reaction solution during a second item test, and obtains second interferent information based on the photoelectric data of the reaction solution. The first item test and the second item test are different types of item tests.

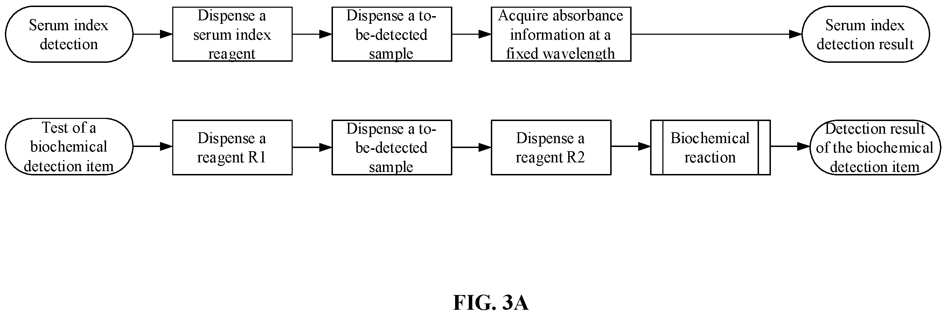

In some embodiments, the sample analysis system obtains the first interferent information in the serum index test and obtains the second interferent information during the item test. An exemplary process is shown in FIG. 3A. The sample analysis system is applied for the serum index test, the sample analysis system injects a serum index reagent (usually a physiological saline reagent, which is a kind of pretreatment reagent) into the reaction vessel, and aspirates a to-be-detected sample (a first to-be-detected sample) from a sampling tube and injects the to-be-detected sample into the reaction vessel. A pretreatment solution is prepared after the to-be-detected sample is mixed with the serum index reagent, and the pretreatment solution is detected by using a serum index test process, to obtain a serum index detection result, for example, absorbance information at a fixed wavelength is acquired to calculate the serum index. Furthermore, a biochemical detection item is performed on the to-be-detected sample in the sampling tube. Specifically, the sample analysis system injects a reagent R1 of the detection item into the reaction vessel (in a normal situation, the reagent R1 does not have a biochemical reaction with the to-be-detected sample, and mainly plays a role of diluting, creating a reaction environment or the like, and the reagent R1 may be a kind of pretreatment reagent), aspirates a to-be-detected sample (a second to-be-detected sample) from the sampling tube and injects the to-be-detected sample into the reaction vessel, and dispenses a reagent R2 (a reaction reagent) into the reaction vessel. The to-be-detected sample reacts with the reagent R2 to obtain a reaction solution, and a detection result of the biochemical detection item is obtained from photoelectric data of the reaction solution.

In the above embodiments, the first interferent information and the second interferent information are required to be detected by aspirating the to-be-detected samples from the sampling tubes respectively and adding corresponding reagents respectively, which not only makes the test process repetitive and cumbersome, but also wastes the reagents. In order to further simplify the test process and save the reagents, test processes of the first interferent information and the second interferent information may be designed into the same test, that is, after the interferent detection is performed on the to-be-detected sample or the pretreatment solution of the to-be-detected sample in the reaction vessel to obtain the first interferent information, the control device controls the reagent dispensing mechanism to dispense the reaction reagent into the reaction vessel to prepare the reaction solution, and the photoelectric data of the reaction solution is used to obtain the second interferent information. Since the first interferent information and the second interferent information may be detected by aspirating the to-be-detected sample only once, test steps may be saved, test efficiency may be improved, and cost of consumables related to the aspiration of the to-be-detected sample may be saved.

Specifically, the process of obtaining the first interferent information and the second interferent information in the same test includes the following operations. The sample dispensing mechanism aspirates the to-be-detected sample from the sampling tube and then injects the to-be-detected sample into the reaction vessel. The sample analysis system may perform the interferent detection on the to-be-detected sample (or the further prepared pretreatment solution) in the reaction vessel in any of the above manners, to obtain the first interferent information. The reagent dispensing mechanism injects the reaction reagent into the reaction vessel to prepare the reaction solution. The detection device performs optical detection on the reaction solution to obtain photoelectric data of the reaction solution, and the control device analyzes the photoelectric data to obtain the second interferent information. In some embodiments, the second interferent information may be obtained in the detection item, that is, the item test process may obtain not only the detection result of the detection item, but also obtain the interferent information. Alternatively, the second interferent information may be obtained in any process specific to the interferent detection.

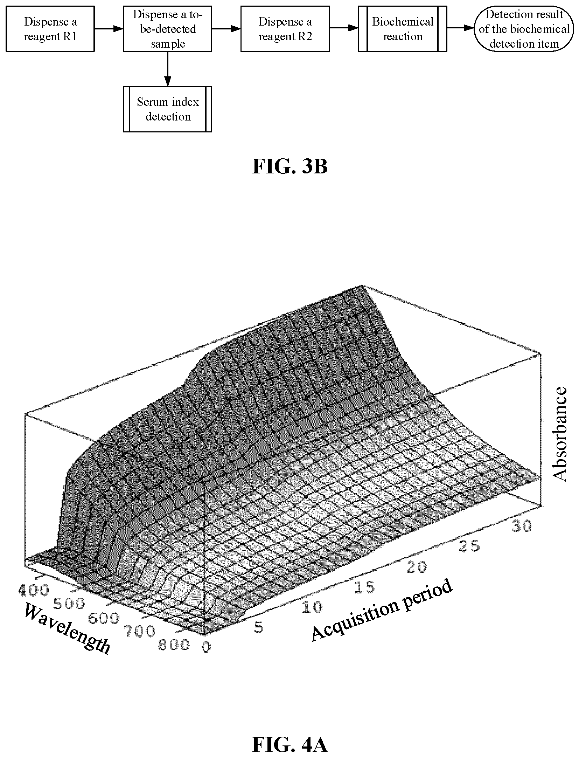

An exemplary process is shown in FIG. 3B. The sample analysis system injects a reagent R1 of the detection item into the reaction vessel, and aspirates a to-be-detected sample from the sampling tube and injects the to-be-detected sample into the reaction vessel. In a normal situation, the reagent R1 does not have a biochemical reaction with the to-be-detected sample, and mainly plays a role of diluting, creating a reaction environment, etc. Therefore, after the to-be-detected sample is added, the pretreatment solution may be detected by using a serum index test process, to obtain a serum index detection result (first interferent information). A reaction reagent R2 is injected into the reaction vessel, and the reaction reagent R2 reacts with the to-be-detected sample biochemically to prepare a reaction solution. A detection result of the biochemical item and second interferent information may be obtained from photoelectric data of the reaction solution. It should be noted that whether the detection result has been obtained in the serum index test process may not affect the action of adding the reaction reagent R2. As long as data acquisition of the pretreatment solution is completed, for example, image photographing is finished or acquisition of the photoelectric data is completed, the reaction reagent R2 may be injected into the reaction vessel, and the acquired data is analyzed to obtain the serum index detection result, which can further shorten the duration of the test process. Furthermore, in this example, the detection item is a dual-reagent item (the reagent R1 and the reagent R2), and the detection of the first interferent information may be dependent on some of the reagents (the reagent R1) without adding an additional reagent to detect the first interferent information separately, thereby saving cost of the reagents. This advantage may be extended to a multi-reagent item.

The photoelectric data of the reaction solution may include intensities of multiple optical signals with different wavelengths, and/or include a signal sequence formed by intensities and time of optical signals corresponding to the same wavelength. The interferent information in the reaction solution is obtained by comparing and analyzing intensities of the optical signals with different wavelengths, and/or analyzing the intensities of respective optical signals in the signal sequence corresponding to the same wavelength. The interferent information characterizes an interferent situation in the reaction solution, such as specific interferents (such as lipide particles) present in the reaction solution.

In a first method, when the control device 50 obtains the second interferent information in the reaction solution based on the photoelectric data, the control device 50 is specifically configured to: extract at least one characteristic interference quantity from the photoelectric data, and obtain the second interferent information in the reaction solution based on the at least one characteristic interference quantity. The characteristic interference quantity is a signal characteristic for identifying an abnormality.

Specifically, if the photoelectric data include intensities of multiple optical signals with different wavelengths, the intensities of the multiple optical signals with different wavelengths may be obtained at the same position of the reaction solution in the same time period, and the photoelectric data corresponding to multiple wavelengths may be referenced to each other. Therefore, the interferent information in the reaction solution may be obtained by comparing the intensities of the optical signals with different wavelengths at the same position in the same time period. The characteristic interference quantity extracted from the intensities of the multiple optical signals with different wavelengths includes, but is not limited to a range of an interference wavelength band.

If the photoelectric data include a signal sequence formed by correspondences between intensities and time of optical signals corresponding to the same wavelength, the signal sequence may be expressed as a pulse waveform (or referred to as a signal curve). At least one of the following characteristic interference quantities may be extracted from the photoelectric data corresponding to each wavelength, such as a peak value, a valley value, a pulse start point, a pulse end point, a pulse width, a half peak width, a specific width, an area, a slope, a rising edge timing and a falling edge timing in the signal curve corresponding to the signal sequence. The at least one characteristic interference quantity is used to determine the interferent information in the reaction solution. For example, whether an abnormality occurs in the reaction solution may be determined by using a number of peaks or valleys in the signal sequences in multiple detection periods of the same reaction solution.

The photoelectric data of the reaction solution may be drawn to obtain a reaction curve (a reaction spectrum), and whether the photoelectric data of the reaction solution is subject to a certain interference may be determined by using the reaction curve of the reaction solution and multiple interference characteristic quantities. For example, the interference in the detection item (the interference does not have a reaction characteristic in the detection item) is identified by a 3D reaction curve. Specifically, if a biochemical reaction in the detection item has a reaction characteristic at wavelengths 1 to 5, and a certain interference has a reaction characteristic at wavelength 7, the wavelength 7 is considered to be the interference characteristic quantity of the interference. When the interference characteristic quantity exceeds a normal threshold, it is considered that the detection item of the sample is subject to the interference.

In a second method, when the control device 50 obtains the second interferent information in the reaction solution based on the photoelectric data, the control device 50 is specifically configured to: input the photoelectric data into a first preset machine learning model, and acquire the second interferent information in the reaction solution outputted by the first machine learning model from the photoelectric data. For example, absorbance or reactivity may be calculated by using the light intensity signal in the photoelectric data, the absorbance or the reactivity may be inputted into the first machine learning model, and the first machine learning model may output information about whether the reaction solution is abnormal and/or the interferent type in the reaction solution.

The first machine learning model may be a neural network model, and the first machine learning model may be a machine learning model trained by using the photoelectric data as sample data, so that the first machine learning model has ability of identifying the interferent information in the reaction solution, and the photoelectric data may be inputted into the pre-trained first machine learning model, to obtain the interferent information in the reaction solution. The neural network model may be a network model with any existing structure, including but not limited to CNN.

The first interferent information includes at least one of a signal waveform, an interferent content, or an interferent type, and the second interferent information includes at least one of a signal waveform, an interferent content, or an interferent type. The signal waveform may be formed by correspondences between intensities and acquisition moments of optical signals, that is, the photoelectric data is expressed in a form of signal waveform. Since the signal waveform subject to interference is different from a normal signal waveform, the interferent information may be determined through the signal waveform. The interferent type indicates a specific interferent causing the interference, such as a lipemia interference, an icteric interference, a hemolysis interference, a globulin interference, a heparin interference, etc. The interferent content indicates a degree of interference caused by the interferent, which may indicate the interferent type or quantify the degree of interference caused by the interferent.

In some embodiments, in case that the first interferent information includes the first signal waveform and the second interferent information includes the second signal waveform, when the control device 50 determines the interferent type or the interferent source in the reaction solution based on the first interferent information and the second interferent information, the control device 50 is specifically configured to determine the interferent source based on the first signal waveform and the second signal waveform.

Based on the foregoing descriptions, it may be understood that the first signal waveform indicates the interferent information in the to-be-detected sample (or the pretreatment solution of the to-be-detected sample), the second signal waveform indicates the interferent information in the reaction solution prepared by adding the reaction reagent into the to-be-detected sample, and it may be determined whether the interferent is present and further the interferent source in case that the interferent is present, by comparing a difference between the first signal waveform and the second signal waveform. If the first signal waveform is an abnormal signal waveform and the second signal waveform is an abnormal signal waveform, it is indicated that there is a large probability that the interferent comes from the to-be-detected sample. If the first signal waveform is a normal signal waveform and the second signal waveform is an abnormal signal waveform, it is indicated that there is a large probability that the interferent comes from the reaction reagent added to the to-be-detected sample or comes from the reaction process. If the first signal waveform is an abnormal signal waveform and the second signal waveform is a normal signal waveform, it is indicated that the detection is abnormal or there is a large probability that the interferent comes from the to-be-detected sample. If the first signal waveform is a normal signal waveform and the second signal waveform is a normal signal waveform, it is indicated that no interferent is present. In the absence of assistance from other interferent information, a situation with a large probability may be used as the interferent source.

In some embodiments, in case that the first interferent information includes the first interferent content and the second interferent information includes the second interferent content, when the control device 50 determines the interferent type or the interferent source in the reaction solution based on the first interferent information and the second interferent information, the control device 50 is specifically configured to determine the interferent type in the reaction solution based on the first interferent content and the second interferent content.

Specifically, not only the interferent type, but also the degree of interference corresponding to the interferent type may be determined based on the first interferent content and the second interferent content. For example, the first interferent content indicates that a lipemia interferent content is 10, the second interferent content indicates that the lipemia interferent content and a globulin interferent content are 100 in a whole, then the globulin interferent content may be determined to be 90 by combining the first interferent content with the second interferent content. When a certain type of interferent content is determined by combining two types of interferent contents, it is not limited to subtraction, and a corresponding calculation method may be provided based on a specific interferent type.

In some embodiments, in case that the first interferent information includes the first interferent type and the second interferent information includes the second interferent type, when the control device 50 determines the interferent type or the interferent source in the reaction solution based on the first interferent information and the second interferent information, the control device 50 is specifically configured to determine the interferent type in the reaction solution based on the first interferent type and the second interferent type.

For example, a common interferent type between the first interferent type and the second interferent type is determined as the interferent type in the reaction solution; or, if the first interferent type does not include a specific interferent type and the second interferent type includes the specific interferent type, the specific interferent type is removed from the second interferent type and then the remaining second interferent type is used as the interferent type in the reaction solution. The specific interferent type is an interferent type set in advance based on an actual situation. In the actual situation, an interferent type that may be accurately detected when the interferent detection is performed on the to-be-detected sample (or the pretreatment solution) may be determined as the specific interferent type. For example, whether the to-be-detected sample (or the pretreatment solution) is turbid is determined by the serum index detection or the visual image detection, to accurately determine whether there is a lipemia interference. If no lipemia interference is present in the first interferent type, while the lipemia interference and other interferent types are present in the second interferent type, the lipemia interference may be removed from the second interferent type, to obtain the interferent type in the reaction solution.

A process of determining the interferent type will be explained below using a creatinine item and a Creatine Kinase (CK) item as examples.

In case that the detection item is the creatinine item, after the control device 50 obtains the first interferent type and the second interferent type, if the first interferent type includes a lipemia interference, and the second interferent type obtained from the detection of the creatinine item includes a globulin interference and the lipemia interference, the control device 50 determines that the interferent type in the reaction solution is the common interferent type, i.e., the lipemia interference. If the first interferent type does not include the lipemia interference, and the second interferent type obtained from the detection of the creatinine item includes the globulin interference and the lipemia interference, the lipemia interference is removed from the second interferent type, and the interferent type in the reaction solution is determined to be the globulin interference.

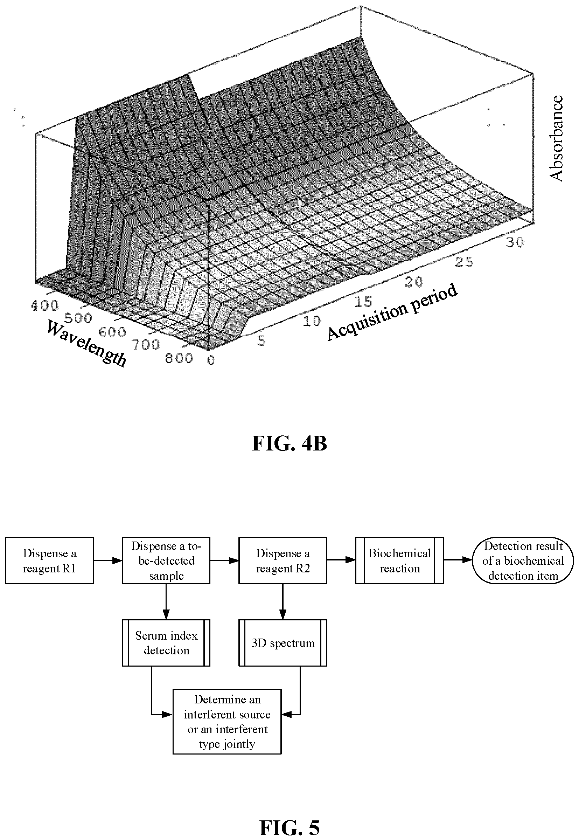

The creatinine item shown in FIG. 4A and FIG. 4B is used as an example. A 3D spectrogram is drawn based on the photoelectric data of the reaction solution, in which the X coordinate axis represents an acquisition moment, the Y coordinate axis represents absorbance, and the Z coordinate axis represents a wavelength band with different wavelengths. Trends of 3D spectral curves shown FIG. 4A and FIG. 4B do not match a trend of a 3D spectral curve of a normal creatinine item. A presence of the globulin interference may be determined from the trend of the 3D spectral curve in FIG. 4A, and a presence of the lipemia interference may be determined from the trend of the 3D spectral curve in FIG. 4B.

In case that the detection item is the CK item, after the control device 50 obtains the first interferent type and the second interferent type, if the first interferent type includes a lipemia interference, and the second interferent type obtained from the detection of the CK item includes a heparin interference and the lipemia interference, the control device 50 determines that the interferent type in the reaction solution is the lipemia interference. If the first interferent type includes no lipemia interference, and the second interferent type obtained from the detection of the CK item includes a heparin interference and the lipemia interference, the control device 50 determines the interferent type in the reaction solution as the heparin interference.

An embodiment of the invention provides a specific process for jointly determining the interferent type. As shown in FIG. 5, the sample analysis system adds a reagent R1 into a reaction vessel, adds a to-be-detected sample into the reaction vessel, performs a serum index detection on a pretreatment solution prepared from the to-be-detected sample and the reagent R1, and obtains a detection result of the serum index (first interferent information). The sample analysis system adds a reagent R2 into the reaction vessel, a reaction solution is obtained after the reagent R2 reacts with the to-be-detected sample biochemically, photoelectric data of the reaction solution is acquired, a 3D spectrum is generated based on the photoelectric data, and the 3D spectrum is analyzed to obtain an interferent information (second interferent information). An interferent source or an interferent type is obtained by combining the detection result of the serum index and the interferent information. For example, whether the lipemia interference is present may be determined based on the detection result of the serum index, and then the presence or absence of the lipemia interference may be further accurately determined depending on whether the interferent information includes the lipemia interference. Since the lipemia interference has a response to the full waveband, if the presence or absence of the lipemia interference is determined only based on the 3D spectrum, it is very easy to confuse or misjudge the lipemia interference with other interferences during determination, resulting in an inaccurate interference determination result. In the embodiment, whether the lipemia interference is present may be determined based on the 3D spectrum in combination with the serum index, so that the presence or absence of the lipemia interference may be determined more accurately, and the accuracy for determining the interference may be improved.

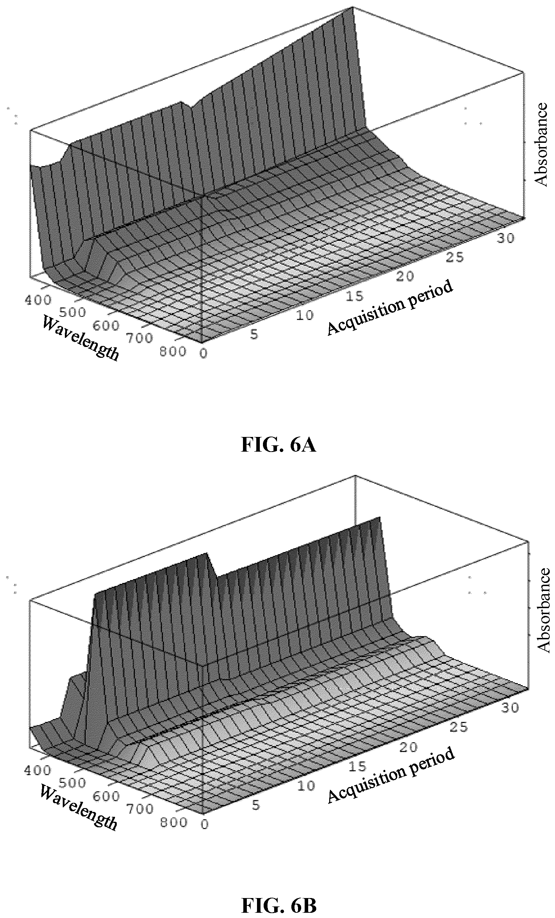

In some embodiments, the photoelectric data may be obtained during a detection item, and the control device 50 may be further configured to obtain a detection result of the detection item for the to-be-detected sample based on the photoelectric data. In a specific implementation, a spectral curve for the detection item may be generated by using the photoelectric data from the detection item, the abscissa of the spectral curve is an acquisition moment, and the ordinate of the spectral curve is absorbance or reactivity. The detection result of the detection item may be obtained by analyzing the spectral curve. It should be noted that the spectral curve may be a 2D reaction curve or a 3D spectrogram. In the 3D spectrogram, the photoelectric data acquired by the detection device include signal sequences corresponding to multiple wavelengths. Reference is made to a normal 3D spectrogram of the CK item provided in FIG. 6A, in which the X coordinate axis represents an acquisition moment, the Y coordinate axis represents absorbance, and the Z coordinate axis represents a wavelength band with different wavelengths. A detection concentration of CK in the blood sample may be obtained by analyzing absorbance at multiple wavelengths in the 3D spectrogram.

Since the interference may be present in the to-be-detected sample or the reaction solution prepared from the to-be-detected sample, the detection result obtained from the photoelectric data of the reaction solution is not accurate enough. In order to improve the accuracy of the detection result, the photoelectric data corresponding to the detection item may be corrected to obtain a more accurate detection result. Therefore, when the detection result of the detection item for the to-be-detected sample is obtained based on the photoelectric data, the control device 50 may be specifically configured to correct the photoelectric data based on the interferent source or the interferent type, to obtain the detection result of the detection item. That is, the detection result obtained by the control device is a corrected detection result.

In a correction method, a preliminary detection result may be obtained by using the second photoelectric data, then a correction amount for the detection result may be obtained by using the interferent source or the interferent type, and the preliminary detection result may be corrected by using the correction amount, to obtain the detection result from the control device 50. That is, an initial detection result of the detection item for the to-be-detected sample is obtained based on the second photoelectric data, and the initial detection result is corrected based on the interferent type or the interferent source, to obtain the detection result of the detection item for the to-be-detected sample.

In some embodiments, when the second photoelectric data is corrected based on the interferent source or the interferent type, to obtain the detection result of the detection item, the control device 50 is configured to: determine, from the second photoelectric data, photoelectric data corresponding to a detection wavelength for the detection item and photoelectric data corresponding to an interference wavelength of an interferent (the interferent is determined by the interferent type or the interferent source); correct the photoelectric data corresponding to the detection wavelength by using the photoelectric data corresponding to the interference wavelength; and obtain the detection result of the detection item based on the corrected photoelectric data corresponding to the detection wavelength. It may be understood that in case that the interference is present in the reaction solution, the photoelectric data acquired by the detection device includes both the photoelectric data corresponding to the interferent and the photoelectric data corresponding to the detection item. Therefore, the two types of photoelectric data are extracted from the photoelectric data respectively. Specifically, the photoelectric data include photoelectric data corresponding to different wavelengths, and a wavelength of an optical signal generated by the interferent may be different from a wavelength of an optical signal generated by a detection substance corresponding to the detection item. Therefore, the photoelectric data corresponding to the interferent and the photoelectric data corresponding to the detection item are extracted from the photoelectric data respectively based on the wavelength band. Further, the photoelectric data of the detection item is corrected by using the photoelectric data of the interferent, to obtain a more accurate detection result.

In some embodiments, in order to correct an impact of the interference on the detection result, the control device 50 is specifically configured to perform the following operations A1 and A2. In operation A1, photoelectric data corresponding to a detection wavelength for the detection item and photoelectric data corresponding to an interference wavelength of an interferent are determined from the second photoelectric data. The interferent is determined by the interferent type or the interferent source. In operation A2, an initial detection result is determined based on the photoelectric data corresponding to the detection wavelength, an interference quantity caused by the interferent is determined based on the photoelectric data corresponding to the interference wavelength, and the initial detection result is corrected based on the interference quantity, to obtain the detection result of the detection item.

In this implementation, the control device 50 first obtains a detection result of the detection item by analyzing the photoelectric data corresponding to the detection wavelength (a deviation is present between the detection result and an accurate result due to interference, and the detection result may be referred to as an initial detection result, to distinguish from the corrected detection result below). It may be understood that the detection result may indicate a proportion of a detection substance, corresponding to the detection item, in the to-be-detected sample. Similarly, a detection result of the interferent, i.e., a proportion of the interferent in the to-be-detected sample may be determined by using the photoelectric data of the interference wavelength, which may be considered as a proportion of the impact of the interferent on the detection result, and may therefore be referred to as an interference quantity. The initial detection result is corrected by using the interference quantity, for example, the interference quantity is subtracted from the initial detection result, to obtain the corrected detection result.

In an actual application, the interference may be removed by using an interference calculation formula. In the interference calculation formula, characteristics of photoelectric data of the interference in different wavelength bands and at different time points are combined and calculated. For example, the impact of the interference on the detection result may be eliminated based on a change in a 3D absorbance curve caused by the interferent. If the detection item is subject to different types of interferents, the interferences are removed by using interference calculation formulas corresponding to different types of interferents. The interference calculation formula may include spectral information at different wavelengths, for example, an interference calculation formula is x*[a]+y*[b]-z*[c], where x, y and z are preset coefficients, and a, b and c are absorbance at respective wavelengths.

For example, in the CK detection item, the reaction solution was prepared by using a CK reagent. As shown in FIG. 6A, the normal 3D spectrum of the CK detection item has a spectral peak only below 400 nm, and a dominant wavelength thereof is 340 nm. Once a hemolysis interference is present, which may refer to an exemplary diagram of a hemolysis spectrum of the CK detection item provided in FIG. 6B, the spectral peak at a wavelength of 340 nm is elevated in the presence of hemolysis interference, thereby bringing a positive bias to the detection result. In a multi-wavelength interference calculation method, a characteristic peak caused by the interference, especially a characteristic peak at a wavelength of 412 nm is captured, because a normal CK detection does not generate photoelectric data in this wavelength band, and only the hemolysis interference will generate a strong characteristic peak in this wavelength band. Therefore, whether the hemolysis interference exceeds an acceptable threshold is determined by using the spectral information at the wavelength of 412 nm, and the hemolysis interference is quantified by the peak at this wavelength. The interference quantity caused by the hemolysis interference in the spectral information at the wavelength of 340 nm is calculated by a normalized coefficient formula and is removed, to restore a chemical reaction with the reagent in the CK detection item to the greatest extent, and approach to a real detection result of the CK detection item to the greatest extent. The interference calculation formula corresponding to the hemolysis interference in the CK detection item is x*[absorbance corresponding to the wavelength of 340 nm]-y*[absorbance corresponding to the wavelength of 412 nm]. The absorbance after removing the interference is further converted, to obtain the corrected CK detection result. It should be noted that the CK detection item may also be provided with other interference characteristic quantities and interference calculation formulas based on the spectral information.

Different types of interferences have different characteristics and manifestations. The interference calculation formula may quantify the degree of interference in the to-be-detected sample, so that the detection result of the detection item can be corrected.

In another correction method, the second photoelectric data is corrected by using the interferent source or the interferent type, and then the corrected photoelectric data is analyzed to obtain the detection result of the detection item. That is, the second photoelectric data is corrected based on the interferent type or the interferent source, and the detection result of the detection item for the to-be-detected sample is obtained based on the corrected second photoelectric data.

In some embodiments, in order to correct the impact of the interference on the detection result, the control device 50 is specifically configured to perform the following operations B1 and B2. In operation B1, photoelectric data corresponding to a detection wavelength for the detection item and photoelectric data corresponding to an interference wavelength of an interferent are determined from the second photoelectric data. The interferent is determined by the interferent type or the interferent source. In operation B2, the photoelectric data corresponding to the detection wavelength is corrected based on the photoelectric data corresponding to the interference wavelength, and the detection result of the detection item is obtained based on the corrected photoelectric data corresponding to the detection wavelength.

The control device 50 first corrects the photoelectric data corresponding to the detection wavelength, then analyzes the corrected photoelectric data corresponding to the detection wavelength, to obtain the detection result of the detection item, and the detection result is closer to the real result of the to-be-detected sample. Methods for correcting the photoelectric data corresponding to the detection wavelength include, but are not limited to multi-band fitting correction and function correction.

For example, if the photoelectric data corresponding to the interference wavelength include photoelectric data corresponding to multiple wavelengths, interference fitted photoelectric data is obtained by fitting the photoelectric data corresponding to multiple wavelengths. The interference fitted photoelectric data is deducted from the photoelectric data corresponding to the detection wavelength, to correct the photoelectric data corresponding to the detection wavelength. In an example of a reactivity spectrum, the reactivity spectrum may be generated by drawing the photoelectric data of the reaction solution in a coordinate system. An interference spectrum is obtained by fitting data in a band affected by the interference in the reactivity spectrum, and the interference spectrum is deducted from data of the detection wavelength, to obtain a spectrum closer to an interference-free state. A detection result calculated by this spectrum is more accurate. Similarly, an absorbance spectrum may refer to the above correction process.

It is assumed that the photoelectric data include photoelectric data of band 1, band 2, band 3... band n, and the photoelectric data of part or all of the bands are selected for fitting depending on whether a change in an optical signal intensity of a band is only related to a target interference, for example, the photoelectric data of band 1, band 2 and band m (m is less than or equal to n) are selected. Reactivity at the selected bands is fitted by using a specific function to obtain a fitted spectrum, an original reactivity spectrum is generated by using the photoelectric data corresponding to the detection wavelength, the fitted spectrum is deducted from the original reactivity spectrum to obtain a corrected reactivity spectrum, and the detection result of the detection item is calculated by using the corrected reactivity spectrum. Similarly, the absorbance spectrum may refer to the above correction process.

In another method, N dominant and secondary wavelength combinations are selected from the photoelectric data corresponding to the detection wavelength, and a standard function corresponding to each dominant and secondary wavelength combination is determined. An empirical function of the interference caused by the interferent source or the interferent type to each dominant and secondary wavelength combination is selected. For the same dominant and secondary wavelength combination, a corresponding standard function is combined with a corresponding empirical function, to obtain a superimposed spectral function. Superimposed spectral functions corresponding to the N dominant and secondary wavelength combinations are solved, to obtain the corrected detection result of the detection item.

The reactivity spectrum is used as an example. At least one set of dominant and secondary wavelengths is selected, and a wavelength combination of the at least one set of dominant and secondary wavelengths needs to satisfy the following conditions. A reactivity calculated at a wavelength combination 1 is brought into a calibration curve corresponding to the wavelength combination, to obtain a concentration C1; a reactivity calculated at a wavelength combination 2 is brought into a calibration curve corresponding to the wavelength combination, to obtain a concentration C2; and a reactivity calculated at a wavelength combination n is brought into a calibration curve corresponding to the wavelength combination, to obtain a concentration Cn. If multiple concentrations (C1, C2, ..., Cn) are close enough, or a range thereof is within a small threshold, it is indicated that the multiple wavelength combinations satisfy the conditions. Similarly, the absorbance spectrum may refer to the above correction process.

It may be understood that a measured reactivity spectrum corresponding to each wavelength combination is a linear superimposition of the interference spectrum and a target reaction spectrum. Therefore, after each wavelength combination is selected, a set of equations may be obtained based on an empirical function of the interference spectrum and the calibration curve corresponding to the wavelength combination, where unknowns are parameters and concentrations in the empirical function. A theoretical true concentration may be solved only if a number of equations in the set of equations is greater than the unknowns. The number of equations depends on a number of wavelength combinations, that is, if a number of parameters in the empirical function is N, the number of wavelength combinations is required to be N+1. Similarly, the absorbance spectrum may refer to the above correction process.

In order to enable the user to know specific content of the interferent source or the interferent type, the control device is further configured to output an interference prompt information based on the interferent source or the interferent type, in case that the interferent source or the interferent type indicates a presence of an interference, so that the user may remove the interference based on the interferent source or the interferent type. The interference prompt information includes, but is not limited to whether the interference is present, the interferent type, the interferent source, a detection item affected by the interference, an impact on the detection result of the detection item (such as a positive impact, a negative impact, a degree of impact), etc. In some embodiments, the sample analysis system may include a display device, and the control device controls the display device to output the above interference prompt information. The display device may be integrated into a single sample analysis device in form of a display screen, or may be provided independent of the sample analysis device. For example, in an assembly line system, a large assembly line screen may be provided to display operation status of each sample analysis device. In some other embodiments, the sample analysis system may not include the display device, and the control device sends the interference prompt information to the display device, to output and display the interference prompt information. Alternatively, the control device is further configured to output the detection result of the detection item, and/or output the interferent type or the interferent source in the reaction solution.

It may be understood that in case of the presence of the interferent, the interferent may have impact on the item detection result of the to-be-detected sample. In order to enable the user to intuitively know whether the interferent has impact on the item detection result and what specific impact the interferent has, the interference prompt information may include an influence relationship between the interferent type and the item detection result. For example, the influence relationship includes a positive interference, a negative interference, and irrelevance. The positive interference indicates that the interferent makes the item detection result high, the negative interference indicates that the interferent makes the item detection result low, and the irrelevance indicates that the interferent does not affect the item detection result. It should be noted that the same interferent may have different impacts on different detection items.

After the interference prompt information is outputted, the user may know, based on the interference prompt information, the detection item affected by the interferent and how the interferent affects the detection item, which is helpful to correct the item detection result.

The interference prompt information may also include a degree of interference caused by the interference, for example, the degree of interference is indicated by an interference level, and the degree of interference includes no interference, mild interference, moderate interference, and severe interference. In some embodiments, the interferent information may be indicated by the interferent content, a content threshold interval corresponding to the interference level is set in advance for each interference level, and the interference level is determined based on a content threshold interval into which the interferent content falls after the interferent content is detected.

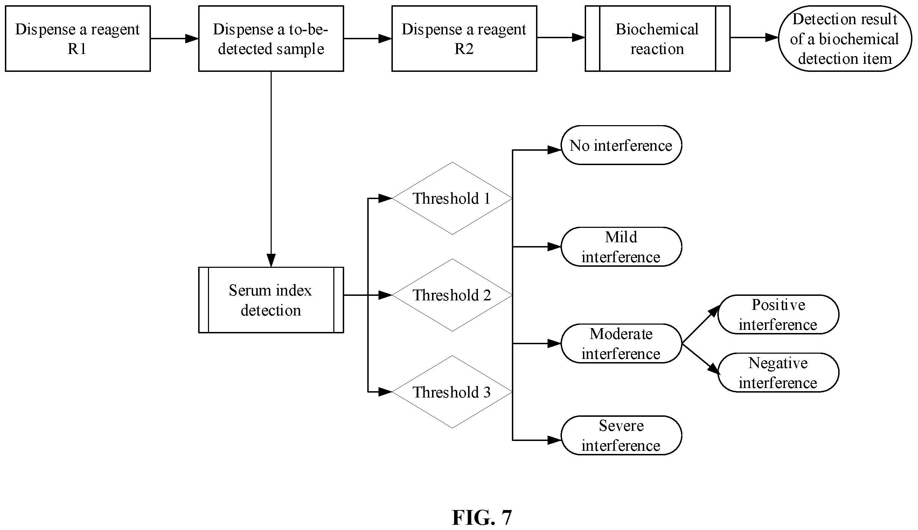

An interference detection process is shown in FIG. 7 as an example, and the interferent content may be obtained by performing the serum index test on the pretreatment solution prepared from the to-be-detected sample and the reagent R1. Furthermore, the item detection result is obtained by performing item detection on the reaction solution prepared from the to-be-detected sample and the reagent R2. It is assumed that detection items include a detection item A, a detection item B and a detection item C, and it is assumed that the detection item A will be affected by the lipemia interference, the detection item B will be affected by the hemolysis interference, and the detection item C will be affected by the icterus interference.

If content of the lipemia interference is greater than a second threshold (threshold 2) and less than a third threshold (threshold 3), and an influence relationship between the detection item A and the lipemia interference is a negative interference, a prompt information may be added to a detection result of the detection item A, for example, the sample is significantly interfered, the concentration in the detection result is low, and a false-negative possibility needs to be considered.

If content of the hemolysis interference is greater than the third threshold (threshold 3), a prompt information may be added to a detection result of the detection item B, for example, the sample is severely interfered, and the sample needs to be acquired again.

If content of the icterus interference is greater than a first threshold (threshold 1) and less than the second threshold (threshold 2), a prompt information may be added to a detection result of the detection item C, for example, the sample is slightly interfered, and the result is still credible.

In case that the interference prompt information includes the influence relationship between the interferent and the detection item and the interference level caused by the interferent, the interference prompt information quantifies the interference, and may help the user to know whether and to what extent the detection result of the detection item is interfered.

In some embodiments, if the interferent source or the interferent type indicates the presence of the interferent, the sample analysis system may automatically process the interference, including: redetecting or recovering the to-be-detected sample. Processing the interference includes, but is not limited to processing the interference based on the first interferent information, or processing the interference based on the interferent source or the interferent type obtained from the first interferent information and the second interferent information. It should be noted that the method for removing the interference performed before redetection is related to the interferent type. If the lipemia interference is present, the interference may be removed by volume reduction, dilution or other methods, and if the hemolysis interference is present, blood may be re-acquired, etc.

In case that the interferent source or the interferent type indicates that the degree of interference is a first degree of severity, the interference is removed and re-test is performed. In case that the interferent source or the interferent type indicates that the degree of interference is a second degree of severity, the to-be-detected sample is directly recovered, for example, the sample tube is transferred to a recovery position. After the interferent source or the interferent type is obtained by using the first interferent information in combination with the second interferent information, the interference is processed by using the interferent source or the interferent type, and an accuracy of a processing basis is higher compared to automatically processing by using the first interferent information only.

However, in order to further save sample detection time, simplify repeated operations and improve detection efficiency, the to-be-detected sample may be redetected or recovered directly based on the first interferent information after the first interferent information is obtained. Two redetection processes will be compared and analyzed below, to explain advantages of this redetection method in simplifying the detection process.

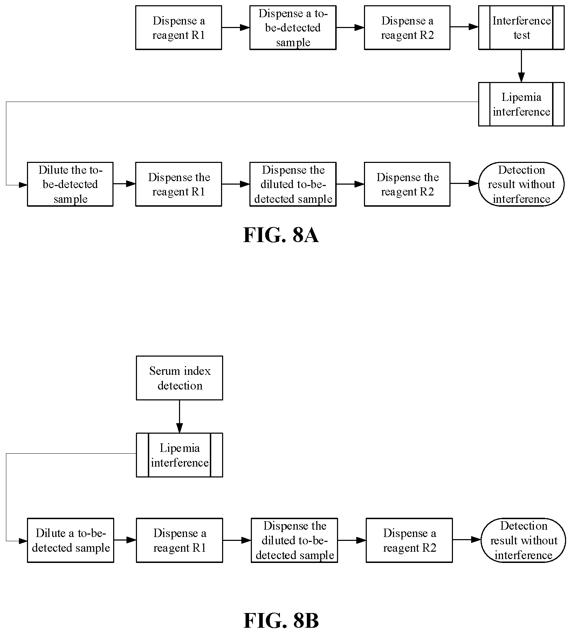

As shown in FIG. 8A, in a detection process, the reagent R1, the to-be-detected sample and the reagent R2 are dispensed into the reaction vessel respectively, the reaction solution is prepared therefrom, and then the interference detection is performed. If it is found after detection that the lipemia interference is present in the reaction solution, the to-be-detected sample is diluted. The reagent R1, the diluted to-be-detected sample and the reagent R2 are re-dispensed into the reaction vessel respectively, the reaction solution is prepared therefrom, and then an item detection is performed, to obtain a detection result without interference.

As shown in FIG. 8B, in a detection process, the first interferent information is identified by the serum index test. If the first interferent information indicates the presence of the lipemia interference, the to-be-detected sample is diluted. The reagent R1, the diluted to-be-detected sample and the reagent R2 are dispensed into the reaction vessel respectively, the reaction solution is prepared therefrom, and then the item detection is performed, to obtain a detection result without interference. It can be seen that this detection process avoids finding the interference after the detection has been completed, instead, the interference is found and processed before adding reagents, thereby saving the detection operations and improving the detection efficiency.

In a specific implementation, if the first interferent information indicates that the degree of interference in the to-be-detected sample reaches the first degree of severity, the to-be-detected sample is processed based on an interference type corresponding to a first sample state, then the sample dispensing mechanism is controlled to aspirate the sample from the processed to-be-detected sample and transfer the sample to the reaction vessel, the reagent dispensing mechanism is controlled to dispense the reagent into the reaction vessel, and the item detection is performed after the reaction solution is prepared in the reaction vessel. If the first interferent information indicates that the degree of interference in the to-be-detected sample reaches the second degree of severity, the sample tube is controlled to be recovered.

In order to further improve the accuracy of identifying the interferent source or the interferent type, in some embodiments, the interference may be determined in combination with photoelectric data of the reagent. Specifically, the control device may control the reagent dispensing mechanism to dispense the reagent into the reaction vessel, and obtain the photoelectric data of the reagent acquired by the optical signal detector after the reagent is added into the reaction vessel. The control device controls the sample dispensing mechanism to dispense the to-be-detected sample into the reaction vessel (if the foregoing reagent is a pretreatment reagent, the control device controls the reagent dispensing mechanism to dispense the reaction reagent into the reaction vessel), and the reaction solution is prepared from the to-be-detected sample and the reagent in the reaction vessel. The interferent source or the interferent type in the reaction solution is determined based on the first interferent information in the to-be-detected sample, the second interferent information in the reaction solution and the photoelectric data of the reagent.

When only the reagent is present in the reaction vessel, a state of the reagent in the reaction vessel, such as a PH value of the reagent, may be obtained based on the photoelectric data or absorbance or transmittance obtained from the photoelectric data, and whether there is an abnormality in the reagent, such as a long time for opening a cap of a reagent bottle, expiration of the reagent, or deterioration of the reagent or the like, may be determined based on the obtained state of the reagent.

In some embodiments, photoelectric data of the reaction reagent (third photoelectric data) may also be obtained, and an interferent information (a third interferent information) in the reaction reagent may be obtained. Specifically, the irradiation light emitted by the light source component forms an emission light (a third emission light) after irradiating the reaction reagent, and the optical signal detector acquires the third emission light and converts the third emission light into the third photoelectric data. The control device is further configured to obtain the third interferent information in the reaction reagent based on the third photoelectric data. The third emission light of the reaction reagent may be acquired before the reaction solution is prepared, that is, the optical signal detector acquires the third emission light after the reaction reagent is dispensed into the reaction vessel and before the to-be-detected sample is dispensed.

Further, the control device determines the interferent source or the interferent type in the reaction solution by using the first interferent information in combination with the second interferent information and the third interferent information.

For example, a common interferent type among the first interferent information, the second interferent information and the third interferent information may be used as the interferent source or the interferent type. In some embodiments, if the third interferent information indicates that the interferent source is the to-be-detected sample or the reagent, the first interferent information indicates that no interference is present in the to-be-detected sample, and the second interferent information indicates that the interference is present in the reagent, then the interferent source may be determined as the reagent.

It may be seen that in the embodiment, the interferent source or the interferent type may be determined by combining state information of the to-be-detected sample, state information of the reaction solution and state information of the reagent, and the determination result of the interferent is more accurate.

An embodiment of the invention further provides a sample analysis system, and the sample analysis system may correct a detection result of a detection item based on first interferent information and second interferent information, so that the sample analysis system can remove an interference and output the detection result closer to an actual sample condition. The sample analysis system provided in the embodiment of the invention includes a sample preparation device, a detection device, and a control device.

The sample preparation device is configured to prepare a reaction solution using at least a portion of a to-be-detected sample and a reaction reagent.

The detection device includes a light source component and an optical signal detector. The light source component is configured to generate an irradiation light, the irradiation light forms a first emission light after irradiating a pretreatment solution or at least a portion of the to-be-detected sample, and the optical signal detector acquires the first emission light to obtain first photoelectric data. The irradiation light forms a second emission light after irradiating the reaction solution, and the optical signal detector acquires the second emission light to obtain second photoelectric data. The pretreatment solution is prepared by the sample preparation device using at least a portion of the to-be-detected sample and a pretreatment reagent.

The control device is configured to: obtain first interferent information in the to-be-detected sample based on the first photoelectric data; obtain second interferent information in the reaction solution based on the second photoelectric data; correct the second photoelectric data based on the first interferent information and the second interferent information; and obtain a detection result of a detection item for the to-be-detected sample based on the corrected second photoelectric data.

In a specific embodiment, the sample analysis system includes a sample dispensing mechanism, a reagent dispensing mechanism, a reaction device, a detection device, and a control device. Hereinafter, only the detection device and the control device will be briefly described, descriptions of other components may refer to related descriptions in the above embodiments, and are not elaborated here.

It should be noted that the detection device acquires photoelectric data for a specific detection item, that is, for a to-be-detected item. During detection of the item, the light source component is configured to generate an irradiation light, the irradiation light forms an emission light after irradiating the reaction vessel, and the optical signal detector acquires the emission light to obtain the photoelectric data.

The control device is configured to: control the sample analysis system to perform interferent detection on the to-be-detected sample or a pretreatment solution of the to-be-detected sample, to obtain first interferent information, the pretreatment solution being prepared from the to-be-detected sample and a pretreatment reagent; obtain second interferent information based on the photoelectric data of the reaction solution; and correct the photoelectric data based on the first interferent information and the second interferent information, to obtain the detection result of the detection item.

In some embodiments, the photoelectric data of the detection item is corrected based on the first interferent information and the second interferent information respectively, and a more accurate detection result is obtained by using the corrected photoelectric data.

In some other embodiments, an interferent information is obtained based on the first interferent information and the second interferent information, and the photoelectric data is corrected by using the interferent information, to obtain the detection result of the detection item. Detailed descriptions of the embodiment may refer to the above related descriptions, and are not elaborated here.

An embodiment of the invention further provides a sample analysis system. The sample analysis system includes a sample dispensing mechanism, a reagent dispensing mechanism, a reaction device, a detection device, and a control device. Hereinafter, only the control device will be briefly described, descriptions of other components may refer to related descriptions in the above embodiments, and are not elaborated here.

The control device is configured to: control the sample analysis system to process the to-be-detected sample to remove an interferent from the to-be-detected sample, in case of determining that the interferent is present in the to-be-detected sample based on the to-be-detected sample or a pretreatment solution of the to-be-detected sample; and control the sample dispensing mechanism to dispense the processed to-be-detected sample into the reaction vessel. A reaction solution is prepared from the to-be-detected sample and the reaction reagent in the reaction vessel, the detection device may acquire photoelectric data of the reaction solution during detection of an item, and the control device obtains the detection result of the item based on the photoelectric data of the reaction solution.

In the embodiment, in case that an interferent is present in the to-be-detected sample, the sample analysis system may perform an item detection process after processing the to-be-detected sample, so that the accuracy of the detection result of the detection item may be ensured. In an existing item detection process, if an interferent is found after the detection result of the item is obtained, the to-be-detected sample is processed and the item detection process is performed again, which leads to unnecessary repetition of the detection process, reduces item detection efficiency, and causes waste of reagents. Compared to the related art, in the embodiment of the invention, the presence of possible interferences may be found before the reaction solution is prepared from the to-be-detected sample, and the item detection process is performed after the interferences are removed, thereby saving cost of the reagents and improving the item detection efficiency.

An embodiment of the invention further provides a sample analysis system. The sample analysis system includes a sample preparation device, a detection device, an acquisition device, and a control device.

The sample preparation device is configured to prepare a reaction solution using at least a portion of a to-be-detected sample and a reaction reagent. In a specific implementation, the sample preparation device may include a sample dispensing mechanism, a reagent dispensing mechanism, and a reaction device. The detection device includes a light source component and an optical signal detector. The light source component is configured to generate an irradiation light, the irradiation light forms an emission light after irradiating the reaction solution, and the optical signal detector acquires the emission light to obtain photoelectric data.

Hereinafter, only the acquisition device and the control device will be briefly described, and descriptions of other components may refer to related descriptions in the above embodiments, and are not elaborated here.

The acquisition device is configured to acquire first interferent information in the to-be-detected sample or a pretreatment solution of the to-be-detected sample. The pretreatment solution is prepared from the to-be-detected sample and a pretreatment reagent.

The first interferent information may be transmitted by another device to the sample analysis system, that is, the acquisition device may be a communication interface, and the sample analysis system receives the first interferent information transmitted by another device through the communication interface. For example, another device is an image analysis device including an image photographing module and an image processing module. The image photographing module may photograph the to-be-detected sample (or the pretreatment solution) to obtain a sample image, and the image processing module identifies the sample image to obtain the first interferent information. The image analysis device transmits the first interferent information to the sample analysis system. Alternatively, another device is a sample analysis device, the sample analysis device detects the to-be-detected sample or the pretreatment solution of the to-be-detected sample to obtain photoelectric data, obtains the first interferent information in the to-be-detected sample based on the photoelectric data, and transmits the first interferent information to the sample analysis system.

The control device is configured to obtain second interferent information in the reaction solution based on the photoelectric data of the reaction solution, and determine an interferent type or an interferent source in the reaction solution based on the first interferent information in combination with the second interferent information.

An embodiment of the invention further provides a sample analysis system. The sample analysis system includes a sample preparation device, a detection device, and a control device.

The sample preparation device is configured to prepare a reaction solution using at least a portion of a to-be-detected sample and a reaction reagent.

The detection device is configured to detect a pretreatment solution or the to-be-detected sample to obtain a first detection parameter, and detect the reaction solution to obtain a second detection parameter. The pretreatment solution is prepared by the sample preparation device using at least a portion of the to-be-detected sample and a pretreatment reagent.

The first detection parameter refers to a parameter obtained by detecting an interferent in the pretreatment solution or the to-be-detected sample, and the first detection parameter is used to obtain the first interferent information in the to-be-detected sample.

For example, the first detection parameter is obtained using an image processing technology, and correspondingly, the first detection parameter includes an image parameter. The to-be-detected sample (or the pretreatment solution of the to-be-detected sample) is photographed to obtain a sample image of the to-be-detected sample (or the pretreatment solution of the to-be-detected sample), the image parameter is obtained after analyzing the sample image, and the image parameter indicates the first interferent information in the to-be-detected sample. It may be understood that the image parameter may reflect a physical characteristic of the to-be-detected sample (such as a color, a turbidity, a precipitation, a lump, a floc, etc.), and the image parameter may include, but is not limited to a color, a pixel depth, a resolution, a bit depth, a color tone, a saturation, a brightness, a color channel, etc.

For another example, the first detection parameter is obtained using an optical analysis technology, and correspondingly, the first detection parameter includes photoelectric data. A specific process for obtaining the photoelectric data by detection using the optical analysis technology may refer to the above related descriptions about the light source component and the optical signal detector, and are not elaborated here. Further, the optical analysis technology may include a PDR technology, and the optoelectronic data include PDR optoelectronic data.

The second detection parameter refers to a parameter obtained by detecting an interferent in the reaction solution, and the second detection parameter is used to obtain the second interferent information in the reaction solution.

For example, the second detection parameter is obtained using an optical analysis technology, and the second detection parameter includes photoelectric data. In a specific implementation, the detection device includes a light source component and an optical signal detector. The light source component is configured to generate an irradiation light, the irradiation light forms a second emission light after irradiating the reaction solution, and the optical signal detector acquires the second emission light and converts the second emission light into second photoelectric data. The second detection parameter includes the second photoelectric data. In this implementation, the control device is configured to obtain the second interferent information in the reaction solution based on the second photoelectric data included in the second detection parameter. Further, the optical analysis technology may include a PDR technology, and the second optoelectronic data include PDR optoelectronic data.

The control device is configured to obtain the first interferent information in the to-be-detected sample based on the first detection parameter, obtain the second interferent information in the reaction solution based on the second detection parameter, and determine an interferent type or an interferent source in the reaction solution based on the first interferent information and the second interferent information.

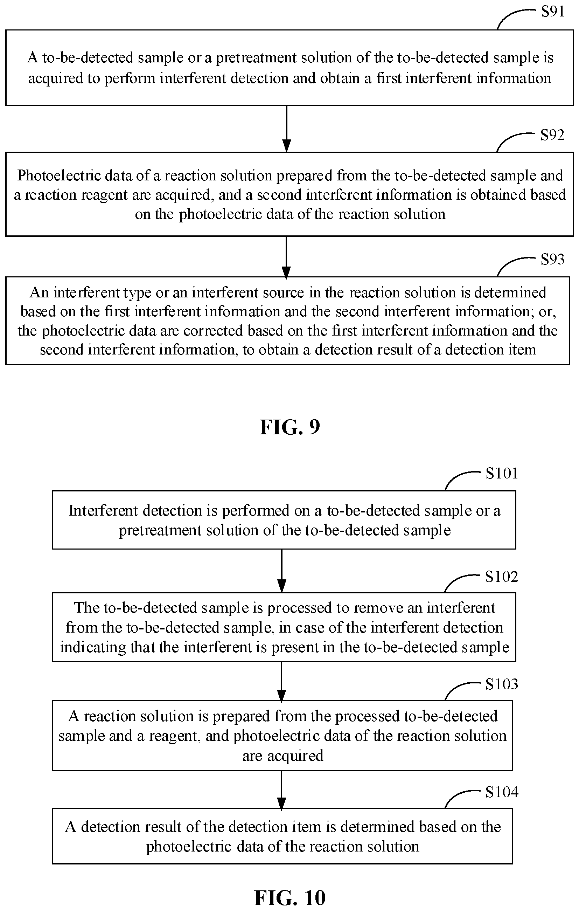

An embodiment of the invention further provides a sample analysis method, and as shown in FIG. 9, the sample analysis method includes the following operations S91 to S93.

In operation S91, a to-be-detected sample or a pretreatment solution of the to-be-detected sample is acquired for interferent detection to obtain first interferent information. The pretreatment solution is prepared from the to-be-detected sample and a pretreatment reagent.

The interferent information in the to-be-detected sample is obtained by various interferent detection methods for the to-be-detected sample, such as image recognition, serum index detection, optical detection, etc.

In operation S92, photoelectric data of a reaction solution prepared from the to-be-detected sample and a reaction reagent are acquired, and second interferent information is obtained based on the photoelectric data of the reaction solution. The photoelectric data are obtained by acquiring an emission light after a light source irradiates the reaction solution.

In operation S93, an interferent type or an interferent source in the reaction solution is determined based on the first interferent information and the second interferent information; or, the photoelectric data are corrected based on the first interferent information and the second interferent information, to obtain a detection result of a detection item.

In the embodiment, the interferent detection may be performed based on the interferent information in the to-be-detected sample and the interferent information in the reaction solution, to obtain an accurate interferent information in the reaction solution. Alternatively, the photoelectric data of the reaction solution may also be corrected based on the interferent information in the to-be-detected sample and the interferent information in the reaction solution, to obtain a more accurate item detection result. Specific descriptions may refer to the above related contents, and are not elaborated here.

An embodiment of the invention further provides a sample analysis method, and as shown in FIG. 10, the sample analysis method includes the following operations S 101 to S104.

In operation S101, interferent detection is performed on a to-be-detected sample or a pretreatment solution of the to-be-detected sample. The pretreatment solution is prepared from the to-be-detected sample and a pretreatment reagent.

In operation S102, the to-be-detected sample is processed to remove an interferent from the to-be-detected sample, in response to the interferent detection indicating that the interferent is present in the to-be-detected sample.

In operation S103, a reaction solution is prepared from the processed to-be-detected sample and a reagent, and photoelectric data of the reaction solution is acquired. The photoelectric data are obtained by acquiring an emission light after a light source irradiates the reaction solution during detection of an item.

In operation S104, a detection result of the detection item is determined based on the photoelectric data of the reaction solution.

In the existing item detection process, if an interferent is found after the detection result of the item is obtained, the to-be-detected sample is processed and the item detection process is performed again, which leads to unnecessary repetition of the detection process, reduces item detection efficiency, and causes waste of reagents. Compared to the related art, in the embodiment of the invention, the presence of possible interferences may be found before the reaction solution is prepared from the to-be-detected sample, and the item detection process is performed after the interferences are removed, thereby saving cost of the reagents and improving the item detection efficiency.

With respect to the above descriptions of the disclosed embodiments, features described in each of the embodiments in the description may be replaced by each other or combined with each other, so that professional technicians in the art may implement or use the invention. The invention is described with reference to various exemplary embodiments. However, it will be appreciated by those skilled in the art that variations and modifications may be made to the exemplary embodiments without departing from the scope of the invention. For example, various operational steps as well as components configured to perform the operational steps may be implemented in different ways, depending on a particular application or considering any number of cost functions associated with operations of the system (for example, one or more operations may be deleted, modified or combined into other operations).

Terms "first", "second" or the like in the description and claims of the invention and the above drawings are intended to distinguish different objects, and are not intended to describe a specific order. Furthermore, terms "including (comprising)", "having" and any variation thereof are intended to cover a non-exclusive inclusion. For example, a process, method, system, product or device including a series of steps or units is not limited to the listed steps or units, and optionally may further include steps or units which are not listed, or optionally further includes other steps or units inherent to the process, method or device.

Furthermore, as understood by those skilled in the art, the principle of the invention may be reflected in a computer program product on a computer-readable storage medium preloaded with computer-readable program codes. Any tangible, non-transitory computer-readable storage medium may be used, including a magnetic storage device (a hard disk, a floppy disk, etc.), an optical storage device (a Compact Disc Read-Only Memory (CD-ROM), a Digital Versatile Disk (DVD), a Blu Ray disk, etc.), a flash memory, and/or the like. The computer program instructions may be loaded onto a general purpose computer, a special purpose computer or other programmable data processing devices to form a machine, so that these instructions executed on the computer or other programmable data processing devices may generate a means for implementing specified functions. These computer program instructions may also be stored in computer-readable memory, which may instruct the computer or other programmable data processing devices to operate in a specific manner, so that the instructions stored in the computer-readable memory may form an article of manufacture including a means for implementing specified functions. The computer program instructions may also be loaded onto the computer or other programmable data processing devices to perform a series of operational steps on the computer or other programmable devices to produce a computer-implemented process, so that the instructions executed on the computer or other programmable devices may provide operations for implementing specified functions.

The foregoing specific descriptions have been described with reference to various embodiments. However, it will be appreciated by those skilled in the art that modifications and variations may be made without departing from the scope of the invention. Therefore, the invention will be considered in an explanatory way rather than a restrictive way, and all these modifications will be included in the scope thereof. Similarly, advantages of various embodiments, other advantages, and solutions to problems have been described above. However, benefits, advantages, solutions to problems, any element which may generate them, or solutions make them clearer, should not be explained as being critical, necessary or essential. A term "including" and any other variant thereof as used herein belong to a non-exclusive inclusion, so that a process, method, article or device including a list of elements includes not only these elements, but also other elements which are not clearly listed or do not belong to the process, method, system, article or device. Furthermore, a term "coupling" and any other variant thereof as used herein refers to a physical connection, an electrical connection, a magnetic connection, an optical connection, a communication connection, a functional connection, and/or any other connections.

The above embodiments only describe several implementations, and they are specifically described in detail, however, they cannot be explained as limiting the patent scope of the invention. It should be pointed out that several modifications and improvements may also be made by those of ordinary skill in the art without departing from the concept of the invention, all of which fall within the scope of protection of the invention. Therefore, the scope of protection of the invention shall be subject to the scope of protection of the appended claims.

## Claims

1. A sample analysis system, comprising:
a sample preparation device, configured to prepare a reaction solution using at least a second portion of a to-be-detected sample and a reaction reagent;
a detection device, comprising a light source component and an optical signal detector, wherein the light source component is configured to generate an irradiation light, the irradiation light forms a first emission light after irradiating a pretreatment solution or at least a first portion of the to-be-detected sample, and the optical signal detector acquires the first emission light to obtain first photoelectric data; the irradiation light forms a second emission light after irradiating the reaction solution, and the optical signal detector acquires the second emission light to obtain second photoelectric data; and the pretreatment solution is prepared by the sample preparation device using at least the first portion of the to-be-detected sample and a pretreatment reagent; and
a control device, configured to: obtain first interferent information in the to-be-detected sample based on the first photoelectric data; obtain second interferent information in the reaction solution and a detection result of a detection item for the to-be-detected sample based on the second photoelectric data; and determine an interferent type or an interferent source in the reaction solution based on the first interferent information in combination with the second interferent information.

2. The sample analysis system of claim 1, wherein the sample preparation device comprises:
a sample dispensing mechanism, configured to dispense the second portion of the to-be-detected sample into a second reaction vessel and dispense the first portion of the to-be-detected sample into a first reaction vessel;
a reagent dispensing mechanism, configured to dispense the pretreatment reagent and the reaction reagent into the second reaction vessel to form the reaction solution, and dispense the pretreatment reagent into the first reaction vessel to form the pretreatment solution; and
a reaction device, provided with at least one reaction site where the second reaction vessel is arranged,
wherein the irradiation light forms the first emission light after irradiating the pretreatment solution in the first reaction vessel, and the optical signal detector acquires the first emission light and converts the first emission light into the first photoelectric data,
wherein the irradiation light forms the second emission light after irradiating a same position of the reaction solution in the second reaction vessel, the second emission light comprises at least two optical signals with different wavelengths, and the optical signal detector converts the at least two optical signals into the second photoelectric data; and/or, the second reaction vessel rotates around the light source component, the optical signal detector acquires the second emission light and converts the second emission light into the second photoelectric data during continuous irradiation of the second reaction vessel by the light source component, and the second photoelectric data comprise signal sequences formed by relationships between acquisition moments and intensities of the at least two optical signals with different wavelengths.

3. The sample analysis system of claim 1, wherein the first portion of the to-be-detected sample and the second portion of the to-be-detected sample are a same portion of the to-be-detected sample, and the sample preparation device comprises:
a sample dispensing mechanism, configured to dispense the portion of the to-be-detected sample into a reaction vessel;
a reagent dispensing mechanism, configured to dispense the pretreatment reagent into the reaction vessel to form the pretreatment solution, and dispense the reaction reagent into the pretreatment solution to form the reaction solution; and
a reaction device, provided with at least one reaction site where the reaction vessel is arranged,
wherein the irradiation light forms the first emission light after irradiating the pretreatment solution in the reaction vessel, and the optical signal detector acquires the first emission light and converts the first emission light into the first photoelectric data,
wherein the irradiation light forms the second emission light after irradiating a same position of the reaction solution in the reaction vessel, the second emission light comprises at least two optical signals with different wavelengths, and the optical signal detector converts the at least two optical signals into the second photoelectric data; and/or, the reaction vessel rotates around the light source component, the optical signal detector acquires the second emission light and converts the second emission light into the second photoelectric data during continuous irradiation of the reaction vessel by the light source component, and the second photoelectric data comprise signal sequences formed by relationships between acquisition moments and intensities of the at least two optical signals with different wavelengths.

4. The sample analysis system of any one of claims 1 to 3, wherein
the irradiation light forms a third emission light after irradiating the reaction reagent, and the optical signal detector acquires the third emission light and converts the third emission light into third photoelectric data;
the control device is further configured to: obtain third interferent information in the reaction reagent based on the third photoelectric data; and determine the interferent type or the interferent source in the reaction solution based on the first interferent information, the second interferent information and the third interferent information; and
the optical signal detector acquires the third emission light after the reaction reagent is dispensed and before the to-be-detected sample is dispensed.

5. The sample analysis system of claim 1, wherein the control device is further configured to:
extract at least one characteristic interference quantity from the second photoelectric data, and obtain the second interferent information in the reaction solution based on the at least one characteristic interference quantity;
or,
input the second photoelectric data into a first preset machine learning model, and acquire interferent information outputted by the first machine learning model as the second interferent information in the reaction solution.

6. The sample analysis system of claim 1, wherein the first interferent information comprises at least one of a signal waveform, an interferent content, or the interferent type, and the second interferent information comprises at least one of a signal waveform, an interferent content, or the interferent type.

7. The sample analysis system of claim 6, wherein
the first interferent information comprises a first signal waveform, and the second interferent information comprises a second signal waveform; and the control device is further configured to: determine the interferent source based on the first signal waveform and the second signal waveform;
or,
the first interferent information comprises a first interferent content, and the second interferent information comprises a second interferent content; and the control device is further configured to: determine the interferent type based on the first interferent content and the second interferent content;
or,
the first interferent information comprises a first interferent type, and the second interferent information comprises a second interferent type; and the control device is further configured to: determine the interferent type based on the first interferent type and the second interferent type.

8. The sample analysis system of claim 7, wherein the control device is further configured to:
determine a common interferent type between the first interferent type and the second interferent type as the interferent type; or
if the first interferent type does not comprise a specific interferent type and the second interferent type comprises the specific interferent type, remove the specific interferent type from the second interferent type and determine remaining interferent type as the interferent type.

9. The sample analysis system of claim 8, wherein the detection item is a creatinine item,
the first interferent type comprises a lipemia interference, and the second interferent type comprises a globulin interference and the lipemia interference; and the control device is further configured to: determine the interferent type as the lipemia interference; or
the first interferent type does not comprise the lipemia interference, and the second interferent type comprises the globulin interference and the lipemia interference; and the control device is further configured to: determine the interferent type as the globulin interference.

10. The sample analysis system of claim 9, wherein the detection item is a Creatine Kinase (CK) item,
the first interferent type comprises a lipemia interference, and the second interferent type comprises a heparin interference and the lipemia interference; and the control device is further configured to: determine the interferent type as the lipemia interference; or
the first interferent type does not comprise the lipemia interference, and the second interferent type comprises a heparin interference and the lipemia interference; and the control device is further configured to: determine the interferent type as the heparin interference.

11. The sample analysis system of claim 1, wherein the control device is further configured to:
determine, from the second photoelectric data, photoelectric data corresponding to a detection wavelength for the detection item and photoelectric data corresponding to an interference wavelength of an interferent, wherein the interferent is determined by the interferent type or the interferent source; and
correct the photoelectric data corresponding to the detection wavelength based on the photoelectric data corresponding to the interference wavelength, and obtain the detection result of the detection item based on the corrected photoelectric data corresponding to the detection wavelength.

12. The sample analysis system of claim 1, wherein the control device is further configured to:
determine, from the second photoelectric data, photoelectric data corresponding to a detection wavelength for the detection item and photoelectric data corresponding to an interference wavelength of an interferent, wherein the interferent is determined by the interferent type or the interferent source;
determine an initial detection result based on the photoelectric data corresponding to the detection wavelength;
determine an interference quantity caused by the interferent based on the photoelectric data corresponding to the interference wavelength; and
correct the initial detection result based on the interference quantity, so as to obtain the detection result of the detection item.

13. A sample analysis system, comprising:
a sample preparation device, configured to prepare a reaction solution using at least a portion of a to-be-detected sample and a reaction reagent;
a detection device, comprising a light source component and an optical signal detector, wherein the light source component is configured to generate an irradiation light, the irradiation light forms a first emission light after irradiating a pretreatment solution or at least a portion of the to-be-detected sample, and the optical signal detector acquires the first emission light to obtain first photoelectric data; the irradiation light forms a second emission light after irradiating the reaction solution, and the optical signal detector acquires the second emission light to obtain second photoelectric data; and the pretreatment solution is prepared by the sample preparation device using at least a portion of the to-be-detected sample and a pretreatment reagent; and
a control device, configured to: obtain first interferent information in the to-be-detected sample based on the first photoelectric data; obtain second interferent information in the reaction solution based on the second photoelectric data; correct the second photoelectric data based on the first interferent information and the second interferent information; and obtain a detection result of a detection item for the to-be-detected sample based on the corrected second photoelectric data.

14. A sample analysis system, comprising:
a sample preparation device, configured to prepare a reaction solution using at least a portion of a to-be-detected sample and a reaction reagent;
a detection device, comprising a light source component and an optical signal detector, wherein the light source component is configured to generate an irradiation light, the irradiation light forms an emission light after irradiating the reaction solution, and the optical signal detector acquires the emission light to obtain photoelectric data;
an acquisition device, configured to acquire first interferent information in the to-be-detected sample or a pretreatment solution, wherein the pretreatment solution is prepared by the sample preparation device using at least a portion of the to-be-detected sample and a pretreatment reagent; and
a control device, configured to obtain second interferent information in the reaction solution based on the photoelectric data, and determine an interferent type or an interferent source in the reaction solution based on the first interferent information in combination with the second interferent information.

15. The sample analysis system of claim 13 or 14, wherein the first interferent information in the to-be-detected sample is information of an interferent that causes an abnormality in a characteristic of the to-be-detected sample.
